# EUROPEAN PATENT APPLICATION

(11) **EP 4 629 486 A1**
(43) Date of publication of application: **08.10.2025**
(21) Application number: 23896947.1
(22) Date of filing: 01.12.2023
(51) Int. Cl.: H02K 5/20

(54) **POWER ASSEMBLY, ELECTRIC MOTOR PUMP ASSEMBLY AND GARDENING TOOL**

(30) Priority: 02.12.2022 CN 202211535549; 02.12.2022 CN 202223219583 U; 19.06.2023 CN 202310728151; 19.06.2023 CN 202321567939 U
(71) Applicant: Greenworks (Jiangsu) Co., Ltd., Changzhou, Jiangsu 213023 (CN)
(72) Inventor: ZHANG, Jun, Changzhou, Jiangsu 213023 (CN); ZHAO, Chunlin, Changzhou, Jiangsu 213023 (CN); HUANG, Hailong, Changzhou, Jiangsu 213023 (CN); JIANG, Kai, Changzhou, Jiangsu 213023 (CN); TANG, Kaihong, Changzhou, Jiangsu 213023 (CN)
(74) Representative: Bergenstråhle & Partners AB
(86) International application number: PCT/CN2023/135914
(87) International publication number: WO 2024/114805

(57) **Abstract**

A power assembly includes a motor, a controller and a first cooling unit. The controller is electrically connected with the motor. The first cooling unit includes a first coolant flow passage and a second coolant flow passage, wherein the first coolant flow passage is configured to be capable of exchanging heat with a heating element of the controller, and the second coolant flow passage is configured to be capable of exchanging heat with an outer housing of the motor. The first coolant flow passage and the second coolant flow passage are connected in series or in parallel.

## Description

### TECHNICAL FIELD

The disclosure belongs to a technical field of electrical equipment and garden tools, and in particular relates to a power assembly, a motor pump assembly and a garden tool.

### BACKGROUND

As a common power component, motors are widely used in the field of garden tools, such as electric cleaning machines, electric floor washing machine, etc. In these application conditions, the motor is often required to maintain high-power operation for a long time, which will cause the motor and control elements thereof to generate a lot of heat. Conventional electrodes and controllers can generally only dissipate heat through air cooling, which has low heat dissipation efficiency and cannot meet usage requirements. The controller often overheats due to excessive temperature rise, affecting the normal use of the equipment.

### SUMMARY

The disclosure provides a power assembly, a motor pump assembly and a garden tool which can improve heat dissipation efficiency.

One or more embodiments of the disclosure provide a power assembly, which includes a motor, a controller and a first cooling unit.

The controller is electrically connected with the motor.

The first cooling unit includes a first coolant flow passage and a second coolant flow passage. Wherein the first coolant flow passage is configured to be capable of exchanging heat with a heating element of the controller, and the second coolant flow passage is configured to be capable of exchanging heat with an outer housing of the motor;

The first coolant flow passage and the second coolant flow passage are connected in series or in parallel with each other, the first cooling unit is provided with a main liquid inlet and a main liquid outlet, and the first cooling unit is configured such that the coolant is capable of passing through the first coolant flow passage and the second coolant flow passage in a process of flowing from the main liquid inlet to the main liquid outlet.

In an embodiment of the disclosure, the controller includes a heat dissipation base made of thermal conductive material, the first coolant flow passage is arranged in the heat dissipation base, and two ends of the first coolant flow passage are exposed on a surface of the heat dissipation base and respectively includes a first liquid inlet and a first liquid outlet.

In an embodiment of the disclosure, the heat dissipation base includes a base body with a groove-shaped flow passage, and an end cover detachably covering the groove-shaped flow passage, and the groove-shaped flow passage and the end cover together enclose to define the first coolant flow passage.

In an embodiment of the disclosure, the heat dissipation base is detachably connected with the controller.

In an embodiment of the disclosure, a thermal conductive insulating plate is arranged between the heat dissipation base and the heating element of the controller.

In an embodiment of the disclosure, the controller further includes a housing and a circuit board, the circuit board is installed in the housing, and the heating element is installed on a first side of the circuit board.

In an embodiment of the disclosure, an opening for the heat dissipation base to pass through is arranged a first side wall of the housing, and the opening is configured to allow the heat dissipation base to be inserted into the housing along a direction parallel to the circuit board.

In an embodiment of the disclosure, one end of the heat dissipation base protrudes to an outer side of the opening, and the first liquid inlet and the first liquid outlet are located on an end surface of the heat dissipation base that protrudes to an outside of the opening.

In an embodiment of the disclosure, at least one edge of the opening is provided with a protruding lug protruding toward an outer side of the housing, and the protruding lug is provided with a first connecting part to be connected with the heat dissipation base.

In an embodiment of the disclosure, a positioning groove matched with an end surface shape of the heat dissipation base is arranged on a second side wall of the housing opposite to the opening, and the positioning groove is provided with a second connecting part to connect the heat dissipation base.

In an embodiment of the disclosure, structural adhesive is filled between a second side of the circuit board and an inner wall of the housing.

In an embodiment of the disclosure, the housing includes a first half housing and a second half housing detachably connected with each other, the circuit board is installed on the first half housing, and the first side of the circuit board is arranged toward the second half housing.

In an embodiment of the disclosure, the controller further includes a housing and a circuit board, the circuit board is installed in the housing, and at least a part of the heat dissipation base is an integrated structure with the housing.

In an embodiment of the disclosure, the second coolant flow passage is arranged at a rear end of the outer housing of the motor, and the rear end is an end away from an output shaft of the motor.

In an embodiment of the disclosure, the second coolant flow passage is configured to be capable of guiding the coolant to be uniformly distributed on an end surface of the outer housing.

In an embodiment of the disclosure, two ends of the second coolant flow passage are exposed on a surface of the outer housing and respectively include a second liquid inlet and a second liquid outlet.

In an embodiment of the disclosure, the second cooling passage includes a spiral flow passage, a radial flow passage and an axial flow passage, the spiral flow passage is distributed on an end surface of the outer housing, the radial flow passage is staggered with the spiral flow passage in an axial direction of the motor, a first end of the radial flow passage passes through a side wall of the outer housing, a second end of the radial flow passage is arranged close to a center of the end surface of the outer housing, a first end of the axial flow passage is communicated with the second end of the radial flow passage, a second end of the axial flow passage is communicated with an innermost circle of the spiral flow passage, one of the second liquid inlet and the second liquid outlet is communicated with the first end of the radial flow passage, and another of the second liquid inlet and the second liquid outlet is communicated with an outermost circle of the spiral flow passage.

In an embodiment of the disclosure, the rear end of the outer housing is provided with a spiral groove and a rear cover detachably covering the spiral groove, and the spiral groove and the rear cover together enclose to define the spiral flow passage.

In an embodiment of the disclosure, the first coolant flow passage is flexibly communicated with the second coolant flow passage.

In an embodiment of the disclosure, the first coolant flow passage and the second coolant flow passage are communicated with each other through a transfer tube.

In an embodiment of the disclosure, the transfer tube is a flexible tube.

In an embodiment of the disclosure, two ends of the transfer tube are communicated with the first coolant flow passage and the second coolant flow passage respectively through flexible connectors, the flexible connectors are configured such that when there is a relative displacement between the motor and the controller, the flexible connectors are capable of maintaining a sealed state between the transfer tube and the first coolant flow passage and maintaining a sealed state between the transfer tube and the second coolant flow passage.

In an embodiment of the disclosure, the flexible connectors include a first plug-in part and a second plug-in part arranged parallel to each other at two ends of the transfer tube, the first plug-in part is rotatably connected with one end of the first coolant flow passage, and the second plug-in part is rotatably connected with one end of the second coolant flow passage.

In an embodiment of the disclosure, the power assembly further includes a second cooling unit, the second cooling unit includes a cavity arranged inside the outer housing, and the cavity is filled with insulating coolant.

In an embodiment of the disclosure, the insulating coolant is insulating oil.

In an embodiment of the disclosure, a volume of the insulating coolant is greater than or equal to 95% of a volume of the cavity.

In an embodiment of the disclosure, the cavity is distributed at least at two ends of a rotor and two ends of a stator of the motor.

In an embodiment of the disclosure, the outer housing is provided with a wiring terminal passing through inner and outer sides of the outer housing, the wiring terminal is insulated from and sealed with the outer housing, and an inner end of the wiring terminal is electrically connected with a winding in the motor through a conductor.

In an embodiment of the disclosure, the power assembly further includes a housing assembly, the motor and the controller are accommodated in the housing assembly, the main liquid inlet is provided with a connector assembly, a first end of the connector assembly is communicated with the main liquid inlet, a second end of the connector assembly protrudes to an outer side of the housing assembly, and the connector assembly is detachably connected with the housing assembly and the main liquid inlet at the same time.

In an embodiment of the disclosure, one of the main liquid outlet and the connector assembly is provided with a plug, another of the main liquid outlet and the connector assembly is provided with a socket, the plug is plugged into and coupled with an inserting hole arranged on the socket, and a sealing ring is arranged between the plug and the inserting hole.

In an embodiment of the disclosure, a limiting groove is arranged on an outer wall of the plug, the socket is provided with a bolt installation hole arranged perpendicular to or at an angle to an axis direction of the inserting hole, a partial area of the bolt installation hole penetrates the inserting hole, a bolt is arranged in the bolt installation hole, the bolt installation hole is flush with the limiting groove on the plug inserted into the inserting hole, and another partial area of the bolt is accommodated in the limiting groove to prevent the plug from being separated from the inserting hole along an axial direction of the plug.

In an embodiment of the disclosure, the housing assembly is provided with a fixing part, and the fixing part is provided with a bolt hole for the bolt to pass through.

In an embodiment of the disclosure, a limiting mechanism is arranged between the connector assembly and the main liquid inlet, and the limiting mechanism is configured to be capable of preventing the connector assembly from rotating relative to the main liquid inlet.

In an embodiment of the disclosure, the limiting mechanism includes a non-circular outer wall arranged on the connector assembly, and a non-circular limiting groove arranged on an outer side of the main liquid inlet and matching a shape of the non-circular outer wall.

In an embodiment of the disclosure, a nut is arranged at one end of the connector assembly away from the main liquid inlet, and the nut is rotatably connected with the connector assembly.

In an embodiment of the disclosure, a sealing gasket ring is arranged at one end of the connector assembly away from the main liquid inlet.

In an embodiment of the disclosure, at least one end of the connector assembly is provided with a filter cover.

One or more embodiments of the disclosure provide the power assembly, which includes the motor, the first cooling unit and a second cooling unit.

The first cooling unit includes a second coolant flow passage, and the second coolant flow passage is configured to be capable of exchanging heat with an outer housing of the motor.

The second cooling unit includes a cavity arranged inside the outer housing, and the cavity filled with insulating coolant.

In an embodiment of the disclosure, the second coolant flow passage is arranged at the rear end of the outer housing of the motor, and the rear end is an end away from the output shaft of the motor.

In an embodiment of the disclosure, the second coolant flow passage is configured to be capable of guiding coolant to be uniformly distributed on the end surface of the outer housing.

In an embodiment of the disclosure, two ends of the second coolant flow passage are exposed on a surface of the outer housing and respectively include a second liquid inlet and a second liquid outlet.

In an embodiment of the disclosure, the second cooling passage includes a spiral flow passage, a radial flow passage and an axial flow passage, the spiral flow passage is distributed on an end surface of the outer housing, the radial flow passage is staggered with the spiral flow passage in an axial direction of the motor, a first end of the radial flow passage passes through a side wall of the outer housing, a second end of the radial flow passage is arranged close to a center of the end surface of the outer housing, a first end of the axial flow passage is communicated with the second end of the radial flow passage, a second end of the axial flow passage is communicated with an innermost circle of the spiral flow passage, one of the second liquid inlet and the second liquid outlet is communicated with the first end of the radial flow passage, and another of the second liquid inlet and the second liquid outlet is communicated with an outermost circle of the spiral flow passage.

In an embodiment of the disclosure, the insulating coolant is insulating oil.

In an embodiment of the disclosure, the volume of the insulating coolant is greater than or equal to 95% of the volume of the cavity.

One or more embodiments of the disclosure provide a motor pump assembly, which includes the motor, a pump head, the controller and the first cooling unit.

The pump head is installed at a power output end of the motor.

The controller is electrically connected with the motor.

The first cooling unit includes the first coolant flow passage and the second coolant flow passage. Wherein the first coolant flow passage is configured to be capable of exchanging heat with the heating element of the controller, and the second coolant flow passage is configured to be capable of exchanging heat with the outer housing of the motor.

The first coolant flow passage and the second coolant flow passage are connected in series or in parallel with each other, the first cooling unit is provided with the main liquid inlet and the main liquid outlet, and the first cooling unit is configured such that the coolant is capable of passing through the first coolant flow passage and the second coolant flow passage in the process of flowing from the main liquid inlet to the main liquid outlet.

The main liquid outlet is communicated with the liquid inlet of the pump head.

In an embodiment of the disclosure, the motor pump assembly further includes the second cooling unit, the second cooling unit includes the cavity arranged inside the outer housing of the motor, and the cavity is filled with insulating coolant.

One or more embodiments of the disclosure provide a garden tool, which includes a housing assembly, a battery pack assembly and the power assembly.

The housing assembly includes a battery pack cavity and a cover covering a top of the battery pack cavity.

The battery pack assembly is accommodated in the battery pack cavity.

The power assembly is electrically connected with the battery pack assembly.

The power assembly includes the motor, the controller and the first cooling unit.

The controller electrically connected with the motor.

The first cooling unit includes the first coolant flow passage and the second coolant flow passage. Wherein the first coolant flow passage is configured to be capable of exchanging heat with the heating element of the controller, and the second coolant flow passage is configured to be capable of exchanging heat with the outer housing of the motor.

The first coolant flow passage and the second coolant flow passage are connected in series or in parallel with each other, the first cooling unit is provided with the main liquid inlet and the main liquid outlet, and the first cooling unit is configured such that the coolant is capable of passing through the first coolant flow passage and the second coolant flow passage in a process of flowing from the main liquid inlet to the main liquid outlet.

In an embodiment of the disclosure, the garden tool further includes the second cooling unit, the second cooling unit includes the cavity arranged inside the outer housing of the motor, and the cavity is filled with insulating coolant.

In an embodiment of the disclosure, a power-off switch is arranged in the housing assembly, the power-off switch is electrically connected with the controller, a linkage mechanism is arranged between the power-off switch and the cover, and the linkage mechanism is configured to be capable of enabling the power-off switch to be turned on when the cover is in a closed state, and to be capable of enabling the power-off switch to be turned off when the cover is in an open state.

Technical effects of the disclosure are that the disclosure dissipates heat from the controller and the motor through water cooling, thereby improving heat dissipation efficiency of the motor and the controller, enabling the motor to maintain high-power operation for a long time and adapting to current usage requirements. The disclosure uses working fluid delivered by the pump head as the coolant for the motor and the controller. Under an action of a negative pressure of the pump head, the working fluid first flows through the coolant flow passages of the controller and the motor, takes away the heat in the controller and the motor, and then is delivered to a washing assembly through the pump head, thereby realizing a flow of the coolant without adding additional driving elements. The controller and the motor of the disclosure are softly connected, which may prevent a vibration of the motor from being transmitted to the controller, thereby increasing a duration life of the controller and reducing the failure rate. The heat dissipation base of the disclosure is detachably connected with the controller, which is convenient for a maintenance of the heat dissipation base and the circuit board.

### BRIEF DESCRIPTION OF THE DRAWINGS

FIG. 1 is a perspective view of a washing machine according to at least one embodiment of the disclosure.
FIG. 2 is an exploded view of the washing machine according to at least one embodiment of the disclosure.
FIG. 3 is an exploded view of a machine assembly according to at least one embodiment of the disclosure.
FIG. 4 is an exploded view of a housing assembly according to at least one embodiment of the disclosure.
FIG. 5 is a partial exploded view of an upper housing according to at least one embodiment of the disclosure.
FIG. 6 is a perspective view of a cover according to at least one embodiment of the disclosure.
FIG. 7 is a perspective view of a motor pump assembly according to at least one embodiment of the disclosure.
FIG. 8 is a perspective view of the motor pump assembly from another angle according to at least one embodiment of the disclosure.
FIG. 9 is a top view of the motor pump assembly according to at least one embodiment of the disclosure.
FIG. 10 is a cross-sectional view taken along the line A-A in FIG. 9.
FIG. 11 is a cross-sectional view taken along the line H-H in FIG. 9.
FIG. 12 is a cross-sectional view taken along the line B-B in FIG. 10.
FIG. 13 is a partial enlarged view of area I in FIG. 12 of the disclosure.
FIG. 14 is a cross-sectional view taken along the line C-C in FIG. 12.
FIG. 15 is a partial exploded schematic view of a motor according to at least one embodiment of the disclosure.
FIG. 16 is an exploded view of a controller according to an embodiment 1 of the disclosure.
FIG. 17 is a perspective view of the controller according to the embodiment 1 of the disclosure.
FIG. 18 is a perspective view of the controller from another angle according to the embodiment 1 of the disclosure.
FIG. 19 is a side view of the controller according to the embodiment 1 of the disclosure.
FIG. 20 is a cross-sectional view taken along the line D-D in FIG. 19.
FIG. 21 is a cross-sectional view taken along the line E-E in FIG. 20.
FIG. 22 is an exploded view of a controller according to an embodiment 2 of the disclosure.
FIG. 23 is a perspective view of the controller according to the embodiment 2 of the disclosure.
FIG. 24 is a perspective view of the controller from another angle according to the embodiment 2 of the disclosure.
FIG. 25 is a front view of the controller according to the embodiment 2 of the disclosure.
FIG. 26 is a cross-sectional view taken along the line F-F in FIG. 25.
FIG. 27 is a cross-sectional view taken along the line G-G in FIG. 26.
FIG. 28 is a perspective view of a circuit board according to the embodiment 2 of the disclosure.
FIG. 29 is a perspective view of a heat dissipation base according to the embodiment 2 of the disclosure.
FIG. 30 is a perspective view of the heat dissipation base from another angle according to the embodiment 2 of the disclosure.
**FIG.** 31 is an exploded view of the heat dissipation base according to the embodiment 2 of the disclosure.
FIG. 32 is a schematic view of an assembly structure of a power assembly and an outer housing assembly according to at least one embodiment of the disclosure.
**FIG.** 33 is an exploded view of the power assembly and the outer housing assembly according to an embodiment of the disclosure.
**FIG.** 34 is a bottom view of an assembly structure of the power assembly and the outer housing assembly according to at least one embodiment of the disclosure.
FIG. 35 is a cross-sectional view taken along the line I-I in FIG. 34.
**FIG.** 36 is a cross-sectional view taken along the line J-J in FIG. 34.
**FIG.** 37 is a cross-sectional view taken along the line K-K in FIG. 36.
FIG. 38 is a schematic view of a matching structure of a connector assembly and a main liquid inlet according to at least one embodiment of the disclosure.
FIG. 39 is a schematic view of an assembly structure of a transfer tube according to at least one embodiment of the disclosure.

### DETAILED DESCRIPTION

**The** following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

**A** power assembly provided by the disclosure has no special restrictions on application conditions. For example, it may be applied to garden tools, electric vehicles and other fields. Since the power assembly of the disclosure adopts a water cooling method, it is particularly suitable for equipment that is provided with a water pump device, such as a washing machine, a floor washing machine, a floor mopping machine, a floor sweeping machine, etc. It should be understood that in other conditions, a technical solution of the disclosure may also be implemented by providing a water pump device.

Conventional power assemblies generally use air cooling for heat dissipation. However, with a development of new energy technologies, motors have been widely used in a variety of conditions that require long-term high-power operation, such as electric garden tools. In these conditions, conventional heat dissipation methods can no longer meet usage requirements, and an equipment often cannot be used normally due to overheating protection. For this reason, the disclosure provides a power assembly with a water cooling function, which can not only improve heat dissipation efficiency of the motor, but also improve heat dissipation efficiency of the controller.

**A** technical solution of the disclosure is described in detail below in conjunction with specific embodiments.

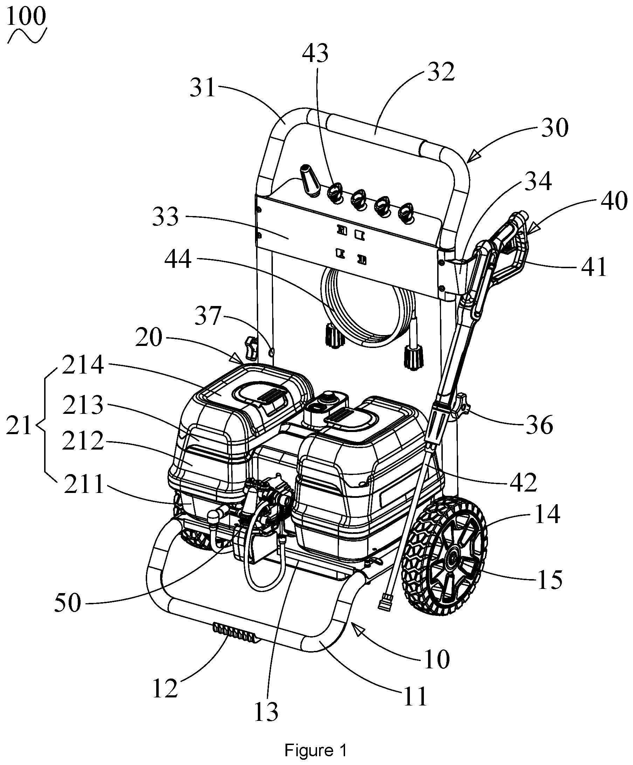

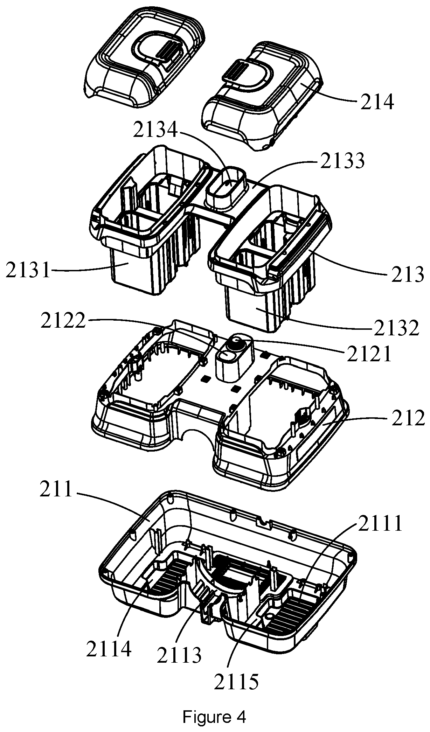

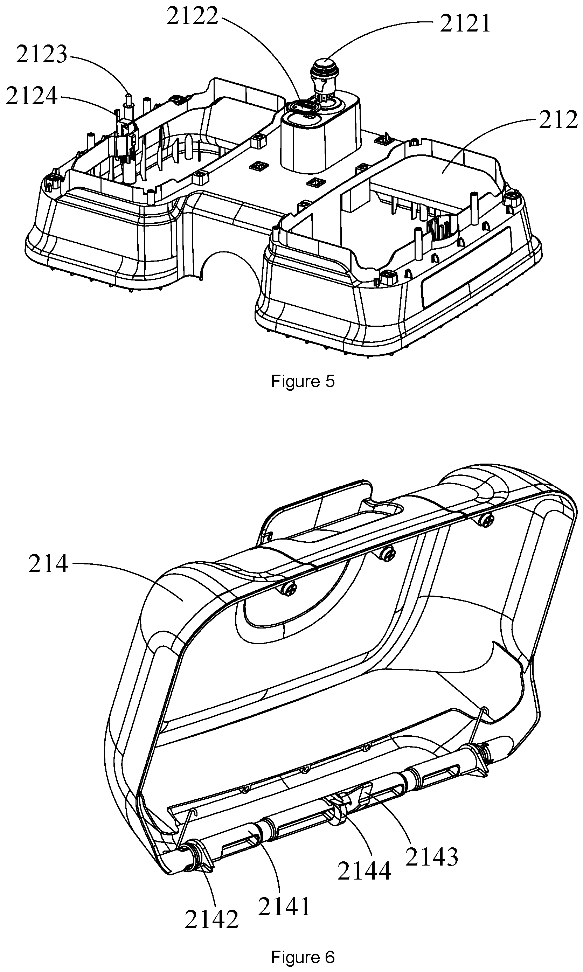

Please refer to FIG. 1 through FIG. 6. The disclosure provides a washing machine. It should be noted that, this embodiment clearly explains the technical solution and its technical effects and principles of the disclosure in combination with specific conditions, and does not mean that the power assembly of the disclosure is only applicable to washing machines. In some other embodiments, the power assembly may also be applied to floor washing machines, floor sweeping machines or electric vehicles, etc.

**A** washing machine 100 provided in this embodiment is used in a field of household cleaning and may be used for cleaning courtyards, fences, vehicles, etc. It may also be used in outdoor conditions without power supply, such as high-pressure cleaning of tableware after picnics, docks, ships, yachts, etc.

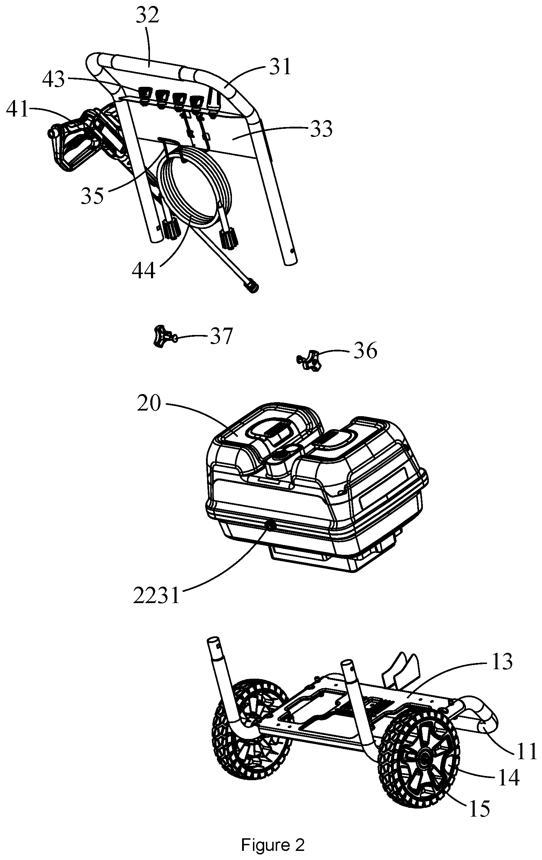

Please refer to FIG. 1 and FIG. 2. The washing machine 100 includes a lower bracket assembly 10, a machine assembly 20 fixed on the lower bracket assembly 10, an upper bracket assembly 30 extending upward from the lower bracket assembly 10, and a washing assembly 40 connected with the upper bracket assembly 30.

The lower bracket assembly 10 can be used as an installation base for the machine assembly 20 and can also be used as a support for pushing the washing machine 100 to move. Specifically, the lower bracket assembly 10 includes a lower bracket 11, a bracket pad 12, an installation base plate 13, a walking wheel 14 and a screw 15. Wherein, the bracket pad 12 is arranged at a middle position of a bottom of the lower bracket 11, and is used to prevent the lower bracket 11 from slipping when it contacts a ground, so that the washing machine 100 can be stably placed on the ground. The machine assembly 20 is installed and fixed on the installation base plate 13. The walking wheel 14 is assembled and fixed to the lower bracket 11 by screws 15, and there are two walking wheels 14 arranged on two sides of the lower bracket 11, which can not only support the washing machine 100, but also drive the washing machine 100 to walk.

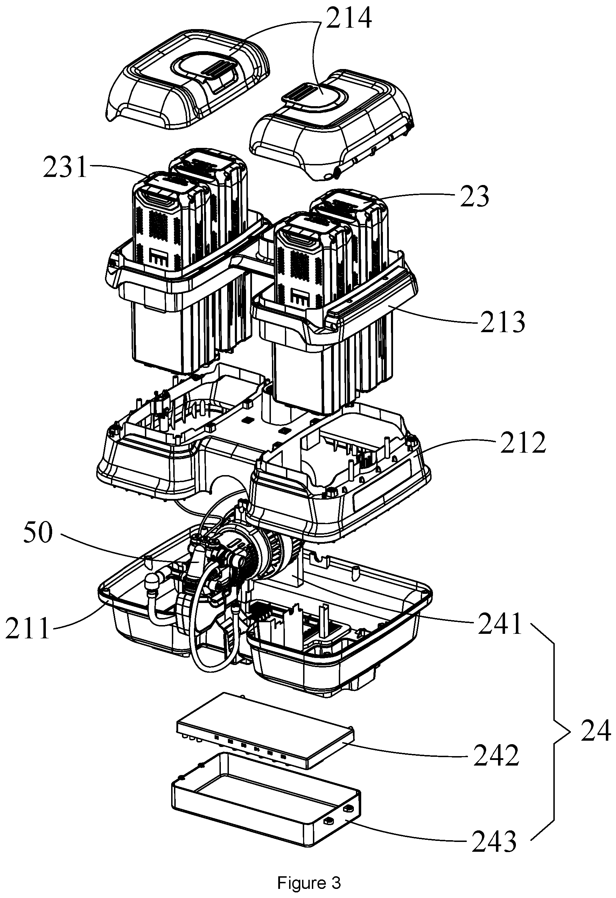

Please refer to FIG. 3 through FIG. 6 in combination with FIG. 1. The machine assembly 20 includes a housing assembly 21, a motor pump assembly 50 and a battery pack assembly 23. Wherein, the housing assembly 21 includes a lower housing 211, an upper housing 212 assembled with the lower housing 211, a battery pack cavity 213 at least partially accommodated in the upper housing 212, and a cover 214 covering a top of the battery pack cavity 213.

Specifically, a plurality of through holes 2111 are arranged at a bottom of the lower housing 211. The through holes 2111 are all arranged to penetrate the lower housing 211, so that an internal cavity of the lower housing 211 is in communication with an outside. The upper housing 212 and the lower housing 211 are assembled and fixed by screws. After the upper housing 212 and the lower housing 211 are assembled, a first accommodating cavity 2113, a second accommodating cavity 2114 and a third accommodating cavity 2115 are formed. Wherein, the first accommodating cavity 2113 is located between the second accommodating cavity 2114 and the third accommodating cavity 2115, the motor pump assembly 50 is accommodated in the first accommodating cavity 2113 and extends out of the housing assembly 21 from the first accommodating cavity 2113, and the battery pack cavity 213 is accommodated in the second accommodating cavity 2114 and the third accommodating cavity 2115 and extends out of the housing assembly 21 from the second accommodating cavity 2114 and the third accommodating cavity 2115. An arrangement of the through hole 2111 enables heat generated by the battery pack assembly 23 in the battery pack cavity 213 to be dissipated through the through hole 2111.

**A** power switch 2121 and a mode switch 2122 are arranged in a middle position of the upper housing 212. Wherein, the power switch 2121 is used to control an on-off of the machine assembly20, and the mode switch 2122 is configured to provide a variety of working modes for the machine assembly 20. For example: to extend a battery life of the machine assembly 20, the mode switch may be an energy-saving switch (ECO mode) to reduce power, which means that by pressing this switch, the motor pump assembly 50 can operate at a preset low-power gear to increase the battery life. The mode switch may also be a high-function switch (TURBO mode) to increase power and enhance cleaning effectiveness for a short time, which means that by pressing this switch, the motor pump assembly 50 can operate for a short time at a preset high-power gear, and output a higher water pressure or flow rate with a higher power to achieve a better cleaning effect. Of course, the mode switch may be provided with the above two working modes at the same time to enhance user's experience in different places. It should be noted that, the disclosure only embodies the above-mentioned energy-saving working mode, but should not be limited to this.

In an energy-saving mode (ECO mode), a total power of the machine assembly 20 is not less than 1.8 KW, a working pressure of the machine assembly 20 is not less than 10 MPa, and a flow rate of the machine assembly 20 is not less than 450 L/H. At this time, when the user is dealing with less serious cleaning work, the washing machine 100 may operate at a lower power in a low-gear mode to increase its battery life. Under a short-time (less than 30 SEC) working mode of high power (TURBO mode), the machine assembly 20 may output a greater working pressure (not less than 20 MPa) with higher power, providing users with a variety of optional working conditions, which means conditions requiring medium cleaning (10 MPa), conditions with high difficulty in cleaning (18 MPa), and conditions with stubborn cleaning (20 MPa), basically achieving a full replacement of a usage conditions of gasoline washing machines.

**The** second accommodating cavity 2114 and the third accommodating cavity 2115 are respectively arranged on two sides of the upper housing 212 and two sides of the lower housing 211. The battery pack cavity 213 includes a first accommodating part 2131 accommodated in the second accommodating cavity 2114, a second accommodating part 2132 accommodated in the third accommodating cavity 2115, and a connecting part 2133 connecting the first accommodating part 2131 with the second accommodating part 2132. The first accommodating cavity 2113 is formed below the connecting part 2133 and separates the first accommodating part 2131 from the second accommodating part 2132. That is to say, the connecting part 2133 is located in a middle, and the first accommodating part 2131 and the second accommodating part 2132 are located on two sides, thereby reducing a volume of the housing assembly 21, enabling an internal space arrangement of the housing assembly 21 to be more compact and a space occupancy rate to be higher. A cavity 2134 is arranged on the connecting part 2133 to expose the power switch 2121 and the mode switch 2122, thereby facilitating the user to operate the power switch 2121 and the mode switch 2122.

The battery pack assembly 23 is installed in the first accommodating part 2131 of the battery pack cavity 213 and the second accommodating part 2132 of the battery pack cavity 213. The battery pack assembly 23 includes one or more detachable battery packs 231. The plurality of detachable battery packs 231 may be connected in series and/or in parallel to convert a power supply voltage into a working voltage of the motor pump assembly 50. Specifically, the disclosure adopts a design of four large-capacity battery packs (80V/5AH), so that a total power is guaranteed to be greater than 800 WH, a minimum operation time is greater than 15 min, and the battery life may be further improved by replacing the battery pack 231. In this embodiment, the four battery packs 231 are connected in parallel to power the entire washing machine 100. Of course, in other embodiments, other connection methods may also be used to power the washing machine 100, such as that multiple low-voltage battery packs 231 are connected in series to supply power, or multiple battery packs 231 are connected in series and parallel to supply power, which will not be repeated here.

There are two covers 214 respectively installed on two side edges of the upper housing 212 in a flip-up manner to expose the first accommodating part 2131 and the second accommodating part 2132 of the battery pack cavity 213, thereby facilitating an insertion or removal of the battery pack 231. Each cover 214 is provided with a flipping rotation shaft 2141 and a flipping spring 2142 sleeved on two ends of the flipping rotation shaft 2141. When the cover 214 is opened, the flipping rotation shaft 2141 rotates synchronously and causes the flipping spring 2142 to be stretched, and after the cover 214 is released, the flipping spring 2142 drives the cover 214 to close automatically. In this embodiment, the cover 214 may be opened to an angle of 90 to 100 degrees through the flipping rotation shaft 2141 to facilitate the insertion or removal of the battery pack 231. The flipping spring 2142 is a torsion spring. When the cover 214 is released, the cover 214 may be automatically closed through a reaction force of the torsion springs arranged at the two ends of the flipping rotation shaft 2141.

In order to avoid collision sound generated by the cover 214 and the battery pack cavity 213 when closing, the disclosure provides a damper 2123 in the upper housing 212. The damper 2123 may first contact with a first pressing block 2143 arranged at a middle position of the flipping rotation shaft 2141 before the cover 214 contacts the battery pack cavity 213, so as to reduce a closing speed of the cover 214 and eliminate the collision sound. At the same time, a second pressing block 2144 arranged at the middle position of the flipping rotation shaft 2141 may enable the power-off switch 2124 arranged on the upper housing 212 to close again, so that a circuit is in a conducting state. Specifically, the first pressing block 2143 and the second pressing block 2144 are arranged at a center position of the flipping rotation shaft 2141, and the damper 2123 and the power-off switch 2124 are correspondingly arranged in the upper housing 212. The first pressing block 2143 is configured to preferentially contact the damper 2123 when the cover 214 is automatically closed, so as to eliminate the collision sound generated by the flipping spring 2142 and the battery pack cavity 213 when the cover 214 is automatically closed, thereby providing a better user's experience. The second pressing block 2144 is configured to abut against the power-off switch 2124 when the cover 214 is in a closed state, so that the power-off switch 2124 is turned on, and to disconnect from the power-off switch 2124 when the cover 214 is in an open state, so that the power-off switch 2124 is disconnected and the washing machine 100 stops working immediately. This arrangement can ensure a safety of the user and prevent personal injury caused by someone reaching into the battery pack cavity 213 and touching a charged object when the cover 214 is in the open state.

In some embodiments, the first pressing block 2143 protrudes in a triangular shape on the flipping rotation shaft 2141. The power-off switch 2124 is a micro switch. The second pressing block 2144 is provided with a contacting surface (unnumbered) abutting against the micro switch 2124, so that the second pressing block 2144 and the micro switch 2124 are in surface contact, and a contact stability is better.

Please refer to FIG. 1 and FIG. 2. The upper bracket assembly 30 includes an upper bracket 31, a sponge sleeve 32 sleeved on the upper bracket 31, an installation panel 33 fixed on the upper bracket 31, and a gun hanger 34 and a high-pressure pipe hook 35 hung on the upper bracket 31. Wherein, the upper bracket 31 and the lower bracket 11 are assembled and fixed through assembling knobs 36 and screws 37. The sponge sleeve 32 is arranged in a middle position of the upper bracket 31, which is convenient for the user to hold and operate the washing machine 100. The installation panel 33 is connected with the upper bracket 31, the gun hanger 34 is fixed to a side of the upper bracket 31 and extends outward, and the high-pressure pipe hook 35 is fixed to a side of the installation panel 33 towards the user, which is convenient for the user to hang or take out a high-pressure water pipe 44.

The washing assembly 40 includes a water gun handle 41, a gun barrel assembly 42, nozzles 43 for various applications and the high-pressure water pipe 44. Wherein the water gun handle 41 is used for the user to hold, the gun barrel assembly 42 is connected with the water gun handle 41, and the nozzle 43 is used to be installed at a tail end of the gun barrel assembly 42 for cleaning work for various purposes, which provides different accessory options for various usage conditions of the washing machine 100. The high-pressure water pipe 44 is connected between a water outlet end of a pump head assembly 222 and the gun barrel assembly 42 to output an external water source to the gun barrel assembly 42 and the nozzle 43 for cleaning. Nozzles 43 for various applications are all installed on the installation panel 33, which enables it to be convenient for users to select. The water gun handle 41 is hung on the gun hanger 34, and the high-pressure water pipe 44 is hung on the high-pressure pipe hook 35, so that the high-pressure water pipe 44 may be easily taken out.

In summary, an arrangement of the upper bracket assembly 30 can not only provide a movable pulling armrest for the entire washing machine 100, but also provide an installation position for various accessories of the washing machine 100 (such as the high-pressure water pipe 44, the nozzles 43, and the water gun handle 41).

**The** machine assembly 20 of the disclosure can be installed in an independent and movable manner, and may be arranged on a frame, or placed on a walking wheeled vehicle (such as a tricycle, a sanitation vehicle, a travel vehicle, etc.) as a cleaning tool that can be used at any time.

It should be noted that, a motor 51 mentioned in the power assembly of the disclosure may be a DC motor or an AC motor. Accordingly, for motors 51 with different power supply types, a structure of a controller 52 and an arrangement of a cooling flow passage may also be adjusted correspondingly. Following embodiments respectively describe the technical solution of the disclosure in detail in combination with the DC motor and the AC motor.

### Embodiment 1

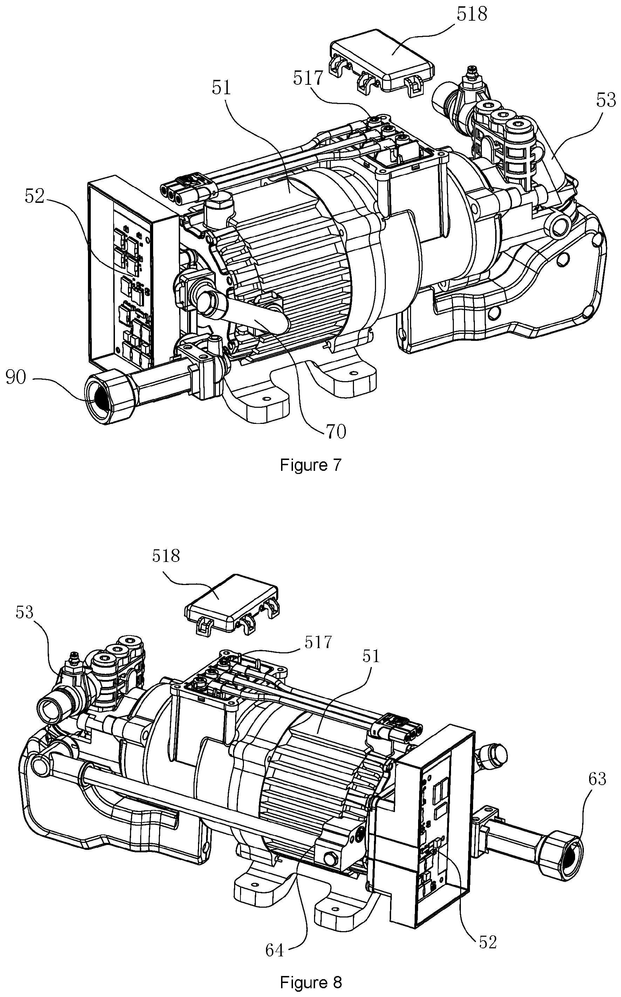

**The** DC scheme is shown in FIG. 7 through FIG. 12. In this embodiment, the motor pump assembly 50 includes the motor 51, a pump head 53, the controller 52 and a first cooling unit. The motor 51 is the DC motor, and the pump head 53 is installed at a power output end of the motor 51. Specifically, a pump housing of the pump head 53 is fixedly connected with an end surface of the motor 51, and a rotor in the pump head 53 is rotatably connected with an output shaft of the motor 51 synchronously. The disclosure has no special restrictions on a specific type of the pump head 53. For example, in a further embodiment, the pump head 53 may be a plunger pump, an impeller pump or a centrifugal pump, etc. An illustrated embodiment is the plunger pump. The controller 52 is electrically connected with the motor 51 and is used to control an on-off, rotating speed, working mode, etc. of the motor 51. The controller 52 may also obtain real-time operating parameters of the motor 51 through sensors so as to feed back an operation state of the motor 51 to the outside.

Please refer to FIG. 7 through FIG. 10, FIG. 12 through FIG. 16, and FIG. 20 through FIG. 21. The first cooling unit includes a first coolant flow passage 61 and a second coolant flow passage 62, wherein the first coolant flow passage 61 is configured to be capable of exchanging heat with a heating element of the controller 52, and the second coolant flow passage 62 is configured to be capable of exchanging heat with an outer housing of the motor 51. The first coolant flow passage 61 and the second coolant flow passage 62 are connected in series or in parallel with each other, the first cooling unit is provided with the main liquid inlet 63 and the main liquid outlet 64, and the first cooling unit is configured such that coolant is capable of passing through the first coolant flow passage 61 and the second coolant flow passage 62 in a process of flowing from the main liquid inlet 63 to the main liquid outlet 64.

In an illustrated embodiment, the first coolant flow passage 61 and the second coolant flow passage 62 are connected in series, which means that the coolant first passes through the first coolant flow passage 61 and then passes through the second coolant flow passage 62. It should be noted that, a communication order of the first coolant flow passage 61 and the second coolant flow passage 62 may be interchanged. For example, the coolant may also pass through the second coolant flow passage 62 first and then pass through the first coolant flow passage 61. Further, in some other embodiments, the first coolant flow passage 61 and the second coolant flow passage 62 may also be connected in parallel to each other, so that the coolant passes through the first coolant flow passage 61 and the second coolant flow passage 62 at the same time. However, the disclosure takes into account that the heat generated by the motor 51 is greater than the heat generated by the controller 52. Therefore, in an embodiment, the first coolant flow passage 61 is set upstream and the second coolant flow passage 62 is set downstream. This can maximize the heat exchange efficiency when a coolant flow rate is limited.

Please refer to FIG. 8, FIG. 9 and FIG. 12. In this embodiment, the main liquid outlet 64 is communicated with a liquid inlet 531 of the pump head 53. It should be noted that, in this embodiment, working fluid delivered by the pump head 53 is used as the coolant for the motor 51 and the controller 52. Under a negative pressure of the pump head 53, the working fluid first flows through coolant flow passages of the controller 52 and the motor 51, taking away the heat in the controller 52 and the motor 51, and then is delivered to the washing assembly through the pump head 53, thereby achieving a flow of the coolant without adding additional driving elements. It should be understood that in some other embodiments, when the power assembly is applied to a device without the pump head 53, a separate fluid driving element may also be arranged to achieve the flow of the coolant.

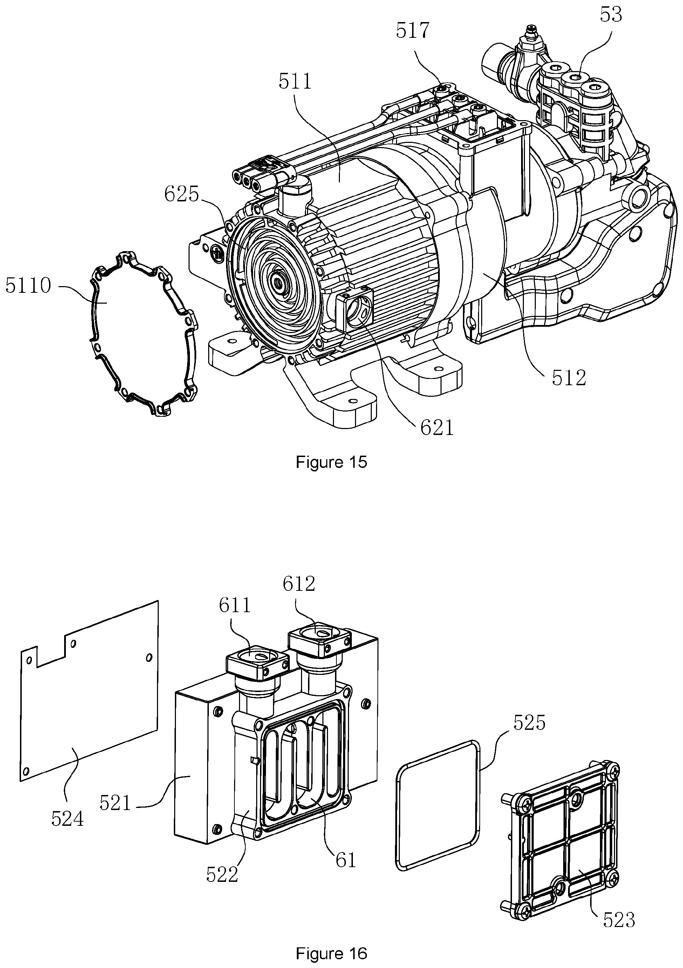

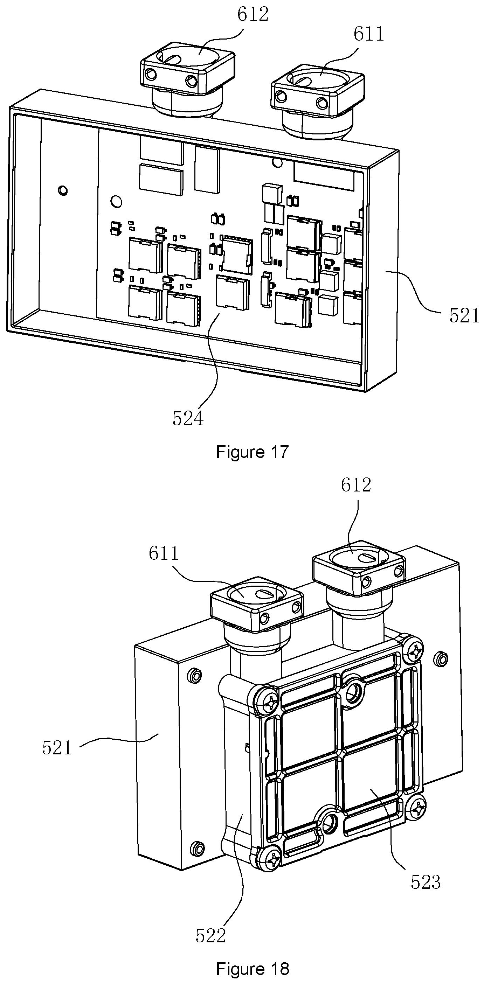

Please refer to FIG. 16 through FIG. 21. In an embodiment, the controller 52 includes a heat dissipation base made of thermal conductive material, the first coolant flow passage 61 is arranged in the heat dissipation base, and two ends of the first coolant flow passage 61 are exposed on a surface of the heat dissipation base and respectively includes a first liquid inlet 611 and a first liquid outlet 612.

Specifically, please refer to FIG. 16, FIG. 18, FIG. 19 and FIG. 21. For ease of processing, the heat dissipation base includes a base body 522 with a groove-shaped flow passage, and an end cover 523 detachably covering the groove-shaped flow passage, and the groove-shaped flow passage and the end cover 523 together enclose to define the first coolant flow passage 61. In order to ensure a sealing of the first coolant flow passage 61, a sealing ring 525 may be arranged between the end cover 523 and the base body 522.

Please refer to FIG. 16, FIG. 17 and FIG. 21. The controller 52 further includes a housing 521 and a circuit board 524. It should be understood that most of electronic components in a DC controller are arranged in close contact with the circuit board 524, and the heat may be dissipated through the circuit board 524. Therefore, in this embodiment, the circuit board 524 may be arranged in close contact with a side wall of the housing 521, and then the heat dissipation base is arranged on an outer side of the side wall where the circuit board 524 is located. In this embodiment, in order to enable a structure of the controller 52 to be more compact, the base body 522 may, for example, be arranged into an integrated structure with the housing 521 of the controller 52.

In a specific embodiment, material of the heat dissipation base may be, for example, a metal material with good thermal conductivity such as aluminum or copper, or a non-metallic material with good thermal conductivity such as nylon. In some embodiments, since the base body 522 is in direct contact with the housing 521, it may be made of an aluminum alloy with good thermal conductivity, and a side of the end cover 523 has no heat dissipation requirements, so it can be made of plastic.

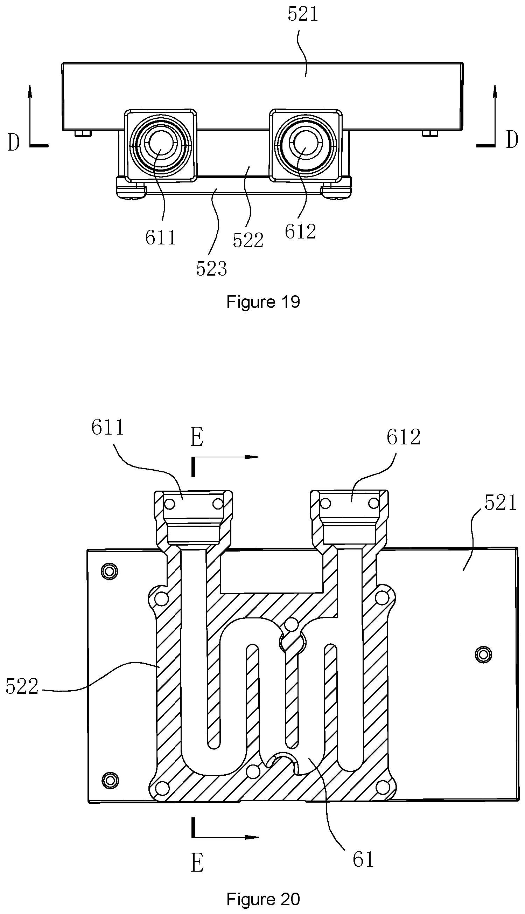

Please refer to FIG. 20. In order to increase a heat exchange area between the first coolant flow passage 61 and the heat dissipation base, the first coolant flow passage 61 may be designed to be circuitous to a certain extent, and its specific shape is not particularly limited. In an illustrated embodiment, the disclosure arranges the first coolant flow passage 61 into a plurality of continuous U-shaped bends, while in some other embodiments, the first coolant flow passage 61 may also be arranged in a spiral shape or other shapes that are conducive to extending a length of a passage. In addition, in order to further improve the heat dissipation efficiency, a path of the first coolant flow passage 61 may also be designed according to a distribution of the heating elements on the circuit board 524, for example, the first coolant flow passage 61 is arranged as close to the heating elements as possible.

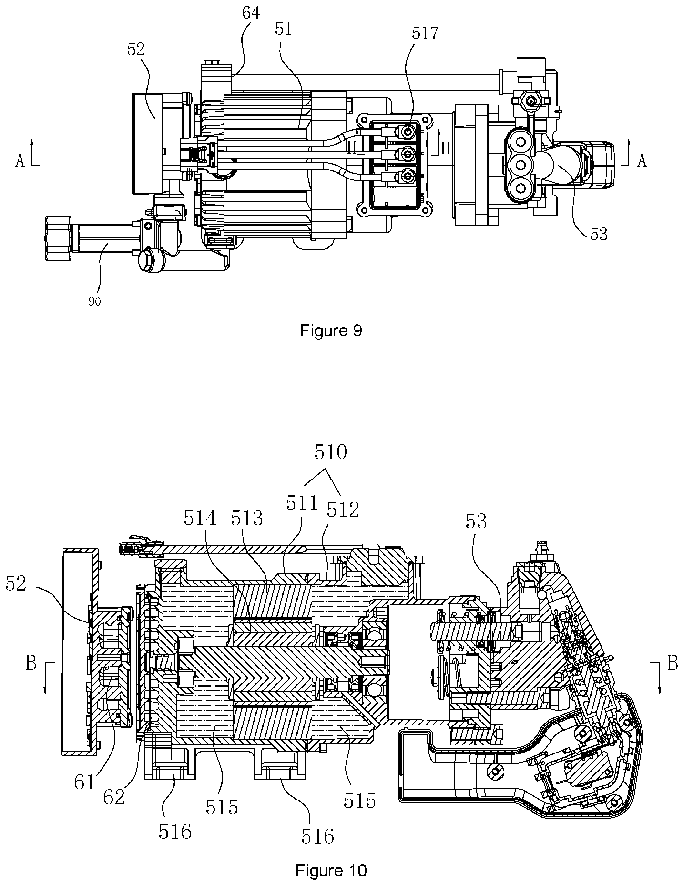

Please refer to FIG. 10, FIG. 12 through FIG. 15. In an embodiment of the disclosure, the second coolant flow passage 62 is arranged at a rear end of the outer housing 510 of the motor 51, and the rear end is an end away from the output shaft of the motor 51. The second coolant flow passage 62 is configured to be capable of guiding the coolant to be evenly distributed on an end surface of the outer housing 510. Two ends of the second coolant flow passage 62 are exposed on a surface of the outer housing 510 and respectively include a second liquid inlet 621 and a second liquid outlet 622. The coolant flow passage may be integrally formed with the outer housing 510 to simplify a manufacturing process. It should be understood that in some other embodiments, the second coolant flow passage 62 may also be arranged on a circumferential surface of the outer housing 510, but considering a convenience of manufacturing and assembly and a reliability of sealing, the second coolant flow passage 62 is arranged on the end surface of the outer housing 510.

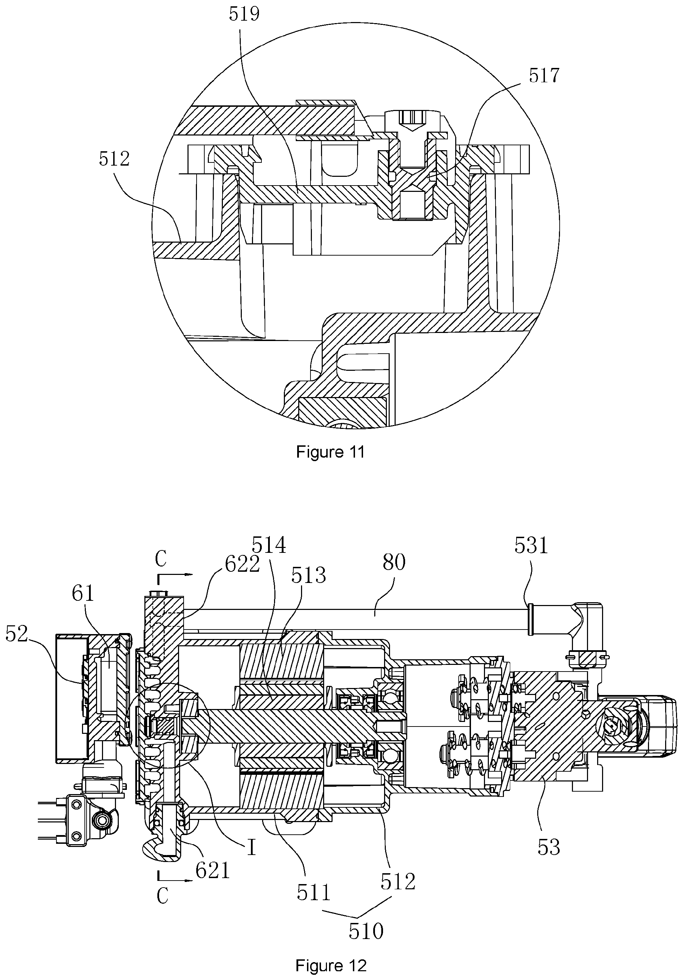

Please refer to FIG. 12 through FIG. 15. In an embodiment of the disclosure, a second cooling passage includes a spiral flow passage 625, a radial flow passage 623 and an axial flow passage 624, the spiral flow passage 625 is distributed on an end surface of the outer housing 510, the radial flow passage 623 is staggered with the spiral flow passage 625 in an axial direction of the motor 51, a first end of the radial flow passage 623 passes through a side wall of the outer housing 510, a second end of the radial flow passage 623 is arranged near a center of the end surface of the outer housing 510, a first end of the axial flow passage 624 is communicated with the second end of the radial flow passage 623, a second end of the axial flow passage 624 is communicated with an innermost circle of the spiral flow passage 625, one of the second liquid inlet 621 and the second liquid outlet 622 is communicated with the first end of the radial flow passage 623, and the other one is communicated with an outermost circle of the spiral flow passage 625. It should be understood that in some embodiments, the coolant may enter from the radial flow passage 623, which means that the second liquid inlet 621 is located at an outer end of the radial flow passage 623, and the second liquid outlet 622 is communicated with an outermost circle of the spiral flow passage 625. The coolant passes through the radial flow passage and the axial flow passage 624 in turn and enters the innermost circle of the spiral flow passage 625, then passes through the spiral flow passage 625 to reach the outermost circle, and then is output from the second liquid outlet 622. In some other embodiments, the coolant may also flow in an opposite manner, which means that the second liquid inlet 621 is communicated with the outermost circle of the spiral flow passage 625, and the second liquid outlet 622 is communicated with the outer end of the radial flow passage 623. The coolant first enters the outermost circle of the spiral flow passage 625, then passes through the spiral flow passage 625, the axial flow passage 624 and the radial flow passage 623 in turn, and is output from the outer end of the radial flow passage 623. In the above description, the outer end of the radial flow passage 623 refers to an end away from an axis of the motor 51, and correspondingly, an inner end of the radial flow passage 623 refers to an end close to the axis of the motor 51. It should be understood that a function of the spiral flow passage 625 is to evenly distribute the coolant on the end surface of the outer housing 510, and a method of evenly distributing the coolant is not limited to this. For example, in some other embodiments, an integral through-type disc-shaped cavity may also be arranged on the end surface of the outer housing 510. The above-mentioned embodiment uses the spiral flow passage 625 to guide the coolant in an orderly manner, which avoids a local retention of the coolant, and thus improves the heat exchange efficiency. Therefore, the spiral flow passage 625 is a more preferred selection.

Please refer to FIG. 15. In an embodiment of the disclosure, the rear end of the outer housing 510 is provided with a spiral groove and a rear cover 5110 detachably covering the spiral groove, and the spiral groove and the rear cover 5110 together enclose the spiral flow passage 625. Specifically, an end of the rear cover 5110 opposite to the spiral groove may be a flat surface, or may be provided with a groove matching the spiral groove to increase a flow cross-section of the flow passage. In a specific embodiment, in order to ensure a sealing of the spiral flow passage 625, a sealing ring may be arranged on an end surface of the rear cover 5110 near an edge.

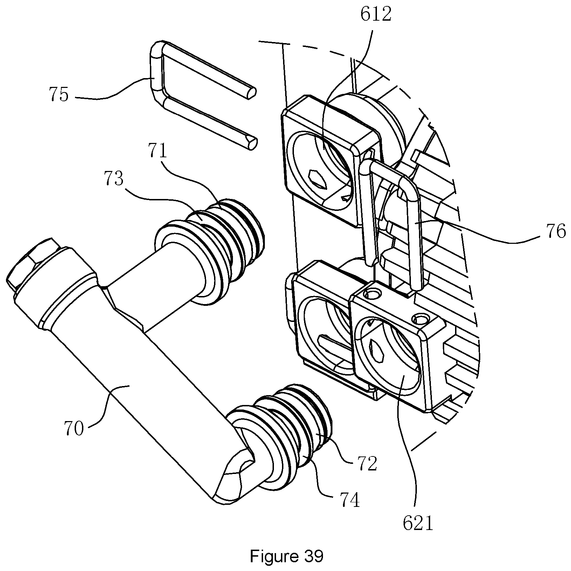

Please refer to FIG. 7 and FIG. 9. The first coolant flow passage 61 is flexibly communicated with the second coolant flow passage 62. It should be understood that in order to prevent a vibration of the motor 51 from being transmitted to the controller 52, there is no rigid connection between the controller 52 and the motor 51. The first coolant flow passage 61 and the second coolant flow passage 62 may be connected through a transfer tube 70, for example. The transfer tube 70 may be a flexible tube or a rigid tube. When a rigid tube is used, a connection port between the transfer tube 70 and the first coolant flow passage 61 and the second coolant flow passage 62 may be a flexible connection port, which can also achieve a flexible connection between the controller 52 and the motor 51. For example, please refer to FIG. 39. Two ends of the transfer tube 70 are communicated with the first coolant flow passage 61 and the second coolant flow passage 61 respectively through flexible connectors, the flexible connectors are configured such that when there is a relative displacement between the motor 51 and the controller 52, the flexible connectors are capable of always maintaining a sealed state between the transfer tube 70 and the first coolant flow passage 61 and the second coolant flow passage 62. In an embodiment, the flexible connector includes a first plug-in part 71 and a second plug-in part 72 arranged parallel to each other at two ends of the transfer tube 70, the first plug-in part 71 is rotatably connected with one end of the first coolant flow passage 61, and the second plug-in part 72 is rotatably connected with one end of the second coolant flow passage 62. It should be understood that since the two ends of the transfer tube 70 are rotatably connected with the first coolant flow passage 61 and the second coolant flow passage 62 respectively, and rotating shafts of the two are parallel to each other. Therefore, the transfer tube 70 is equivalent to a connecting rod connected between the controller 52 and the motor 51. When the motor 51 vibrates, the transfer tube 70 can swing adaptively, thereby reducing a transmission of the vibration of the motor 51 to the controller 52 and increasing a duration life of the controller 52.

Please refer to FIG. 39. In a specific embodiment, for example, a first annular groove 73 and a second annular groove 74 may be arranged on the first plug-in part 71 and the second plug-in part 72, and a first limiting pin 75 and a second limiting pin 76 may be arranged at end parts of the first coolant flow passage 61 and the second coolant flow passage 62. When the first plug-in part 71 and the second plug-in part 72 are respectively inserted into the end parts of the first coolant flow passage 61 and the second coolant flow passage 62, the first limiting pin 75 is inserted into a pin hole arranged at the end part of the first coolant flow passage 61 in a direction perpendicular to the first plug-in part 71, and the second limiting pin 76 is inserted into a pin hole arranged at the end part of the second coolant flow passage 62 in a direction perpendicular to the second plug-in part 72, which enables the first limiting pin 75 and the second limiting pin 76 to pass through the first annular groove 73 and the second annular groove 74, so that at this time the first plug-in part 71 and the second plug-in part 72 may be prevented from being separated from the end parts of the first coolant flow passage 61 and the second coolant flow passage 62, respectively. At the same time, due to existence of the first annular groove 73 and the second annular groove 74, the first plug-in part 71 and the second plug-in part 72 can rotate relative to the first coolant flow passage 61 and the second coolant flow passage 62, respectively.

Please refer to FIG. 7 through FIG. 9, and FIG. 12. In this embodiment, the first liquid inlet 611 is connected with a water inlet tube, the main liquid inlet 63 is arranged on the water inlet tube, the first liquid outlet 612 and the second liquid inlet 621 are connected through the above-mentioned transfer tube 70, the second liquid outlet 622 defines the main liquid outlet 64, and the main liquid outlet 64 is communicated with a liquid inlet of the pump head 53 through a second tube.

Please refer to FIG. 10. In order to further improve the heat dissipation efficiency of the motor 51, the disclosure also includes a second cooling unit, which includes a cavity 515 arranged inside the outer housing 510, and the cavity 515 is filled with insulating coolant. Specifically, the cavity 515 is distributed at least at two ends of a rotor and a stator of the motor 51. A stator 513 and a rotor 514 inside the motor 51 are completely immersed in the insulating coolant, and the insulating coolant can conduct heat generated by the stator 513 and the rotor 514 to the outer housing 510, thereby further improving the heat dissipation efficiency of the motor 51.

Since there are a large number of conductive components such as windings and wiring terminals inside the motor 51, it is necessary to ensure that an insulation of the insulating coolant meets certain requirements. For example, in a specific embodiment, a dielectric constant ε of the insulating coolant is greater than or equal to 2.25. In some embodiments, the insulating coolant may be, for example, insulating oil. It should be understood that a specific type of insulating coolant is not unique. For example, in some other embodiments, the insulating coolant may also be a sealant or thermally conductive silicone adhesive with high thermal conductivity. Accordingly, in order to prevent the insulating coolant from overflowing, corresponding sealing structures may be arranged at each connecting position of the outer housing 510, and a mechanical sealing device should be arranged between the rotating shaft of the motor 51 and the outer housing 510. In a further specific embodiment, in order to avoid damage to sealing elements due to a high pressure generated by a thermal expansion and contraction of air inside the motor 51, and at the same time to reserve an expansion space for a thermal expansion and contraction of the insulating coolant, a filling amount of the insulating coolant needs to meet certain requirements. For example, in an embodiment, a volume of the insulating coolant is greater than or equal to 95% of a volume of the cavity 515. It should be understood that the heat absorbed by the insulating coolant needs to be dissipated through the outer housing 510 eventually. In addition to dissipating heat through the second coolant flow passage 62, the outer housing 510 may also be provided with corresponding heat dissipation fins to speed up the heat exchange efficiency between the outer housing 510 and the air. In some other embodiments, the insulating coolant may also be led out to an external radiator for cooling, and the cooled insulating coolant flows back into the outer housing 510, or the insulating coolant may be circulated in the motor 51 through an internal flow passage design of the motor 51 to improve the heat exchange efficiency between the insulating coolant and the second coolant flow passage 62.

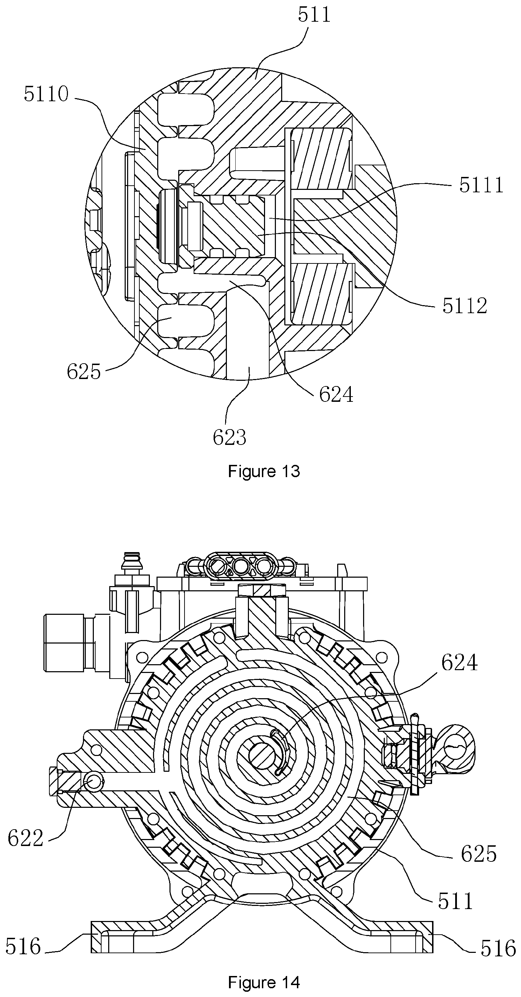

In a specific embodiment, in order to facilitate an assembly of the motor 51, the outer housing 510 may be assembled from a housing body 511 and a front cover 512. Please refer to FIG. 13. When the motor 51 is a permanent magnet motor, in order to facilitate an assembly of the permanent magnet motor rotor, a process hole 5111 may be set at the rear end of the outer housing 510. An operator may position the rotor through the process hole 5111, which solves a problem of the rotor being difficult to assemble due to magnetic attraction. After the rotor is assembled, the process hole 5111 may be sealed with a plug 5112 to ensure a sealing of an inner cavity of the motor 51.

Please refer to FIG. 11. In an embodiment of the disclosure, the outer housing 510 is provided with a wiring terminal 517 passing through inner and outer sides of the outer housing 510, the wiring terminal 517 is insulated and sealed with the outer housing 510, and an inner end of the wiring terminal 517 is electrically connected with a winding in the motor 51 through a conductor. This embodiment can achieve an electrical connection between an internal winding and an external power supply while ensuring the sealing of the motor 51. Please refer to FIG. 11. In a specific embodiment, to facilitate assembly, for example, a hollow part may be first arranged on the outer housing 510, and then the wiring terminal 517 may be installed on an installation plate 519, and then the installation plate 519 may be embedded in the hollow part to achieve the sealing of the outer housing 510. Please refer to FIG. 7 and FIG. 8, a detachable wiring box cover 518 may be arranged on an outer side of the installation plate 519 to improve a dustproof and waterproof effects.

Please refer to FIG. 10 and FIG. 14. In a further embodiment, a support leg 516 is further arranged at a bottom of the outer housing 510, and an installation hole may be arranged on the support leg 516 for connecting to an equipment platform, such as connecting to the lower bracket assembly 10 in this embodiment.

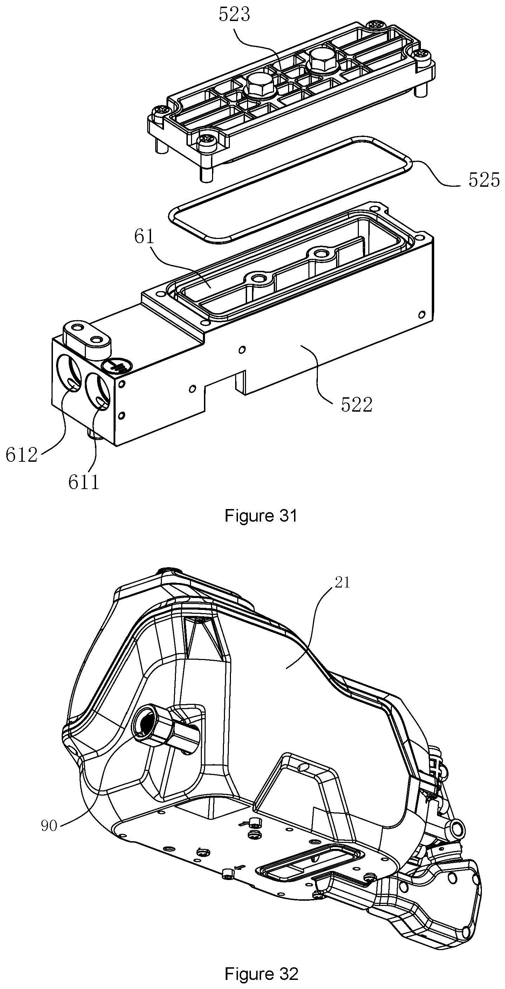

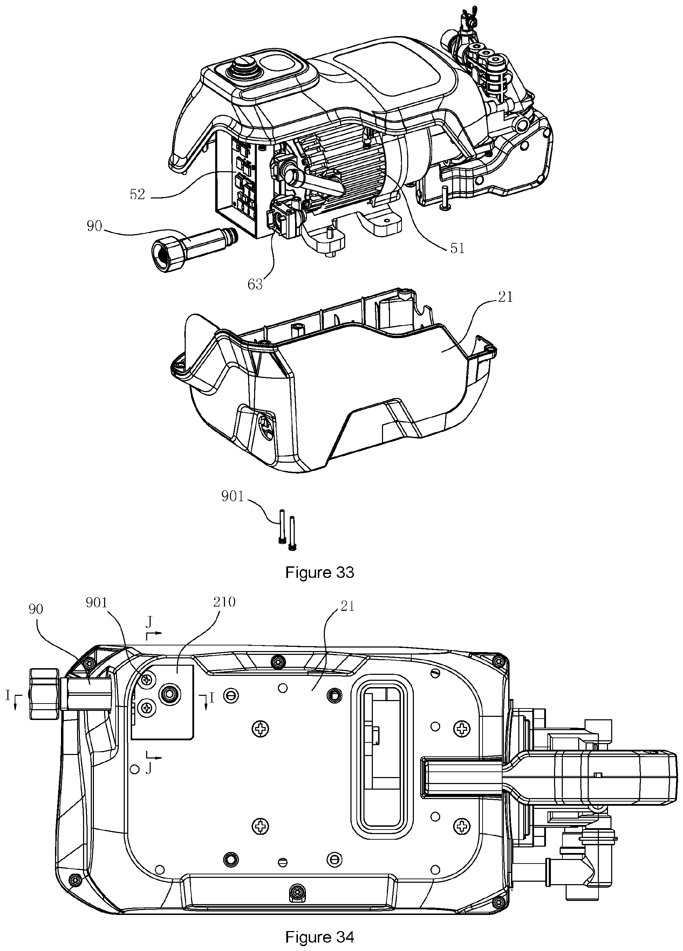

Please refer to FIG. 32 through FIG. 38. In an embodiment of the disclosure, the main liquid inlet 63 is provided with a connector assembly 90, a first end of the connector assembly 90 is communicated with the main liquid inlet 63, a second end of the connector assembly 90 protrudes to an outer side of the housing assembly 21, and the connector assembly 90 is detachably connected with the housing assembly 21 and the main liquid inlet 63 at the same time.

It should be understood that the connector assembly 90 facilitates a connection of the main liquid inlet 63 with an external water supply pipeline. The connector assembly of a conventional cleaning device is generally directly rigidly fixed to a main liquid inlet of the motor pump assembly, which means a "hard connection", or fixed to an outer housing assembly, and then communication with the main liquid inlet of the motor pump assembly through a hose, which means a "soft connection". For the "hard connection", in order to ensure that a connection between the connector assembly and the main liquid inlet is reliable, a U-shaped latch connection or a thread with thread glue fixation may be used. This assembly method is mostly used when the pump head is exposed or a casing has a gap to avoid empty space, so as to avoid an over-positioning of the connector assembly. As for the "soft connection", most hoses are made of soft materials such as PVC or rubber, and a spring needs to be installed on an outer side of the hose to prevent the hose from bending and tangling. The connector assembly of this connection method is generally placed on the housing assembly, and the connector assembly is fixed through a clamping groove and other structures on the housing assembly. As a result, this installation method has more parts, complicated assembly process, and low reliability. Therefore, the disclosure connects the connector assembly 90 with the main liquid inlet 63 and the housing assembly 21 at the same time, thereby ensuring an installation strength of the connector assembly 90 while simplifying an equipment structure and improving assembly efficiency.

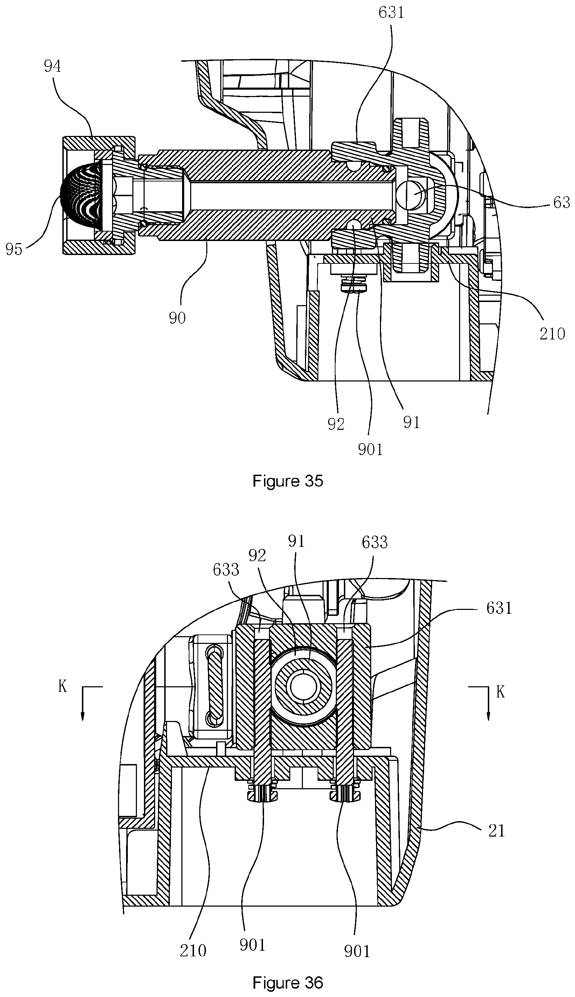

Please refer to FIG. 35 through FIG. 38. One of the main liquid outlet and the connector assembly 90 is provided with a plug 91, the other one is provided with a socket 631, the plug 91 is plugged into and matched with an inserting hole 632 arranged on the socket 631, and a sealing ring is arranged between the plug 91 and the inserting hole 632. In a specific embodiment, the plug 91 is located on the connector assembly 90, and the socket 631 is located at the main liquid inlet 63. It should be understood that in some other embodiments, positions of the plug 91 and the socket 631 may also be interchanged.

Please refer to FIG. 35 through FIG. 38. A limiting groove 92 is arranged on an outer wall of the plug 91, a bolt installation hole 633 is arranged on the socket 631 arranged perpendicular to or at an angle to an axis direction of the inserting hole 632, a partial area of the bolt installation hole 633 penetrates the inserting hole 632, a bolt 901 is arranged in the bolt installation hole 633, the bolt installation hole 633 is flush with the limiting groove 92 on the plug 91 inserted into the inserting hole 632, and another partial area of the bolt 901 is accommodated in the limiting groove 92 to prevent the plug 91 from being separated from the inserting hole 632 along its own axial direction. The housing assembly 21 is provided with a fixing part 210, and the fixing part 210 is provided with a bolt hole for the bolt 901 to pass through. In a specific embodiment, at least a partial area of the bolt installation hole 633 may be provided with an internal thread. During assembly, the motor pump assembly may be first installed in the housing assembly 21 so that a bolt hole on the fixing part 210 is aligned with the bolt installation hole 633 on the socket 631. The connector assembly 90 is then inserted into the inserting hole 632. The bolt 901 is then inserted into the bolt hole and the bolt installation hole 633 in turn from an outer side of the housing assembly 21 and tightened with the internal thread of the bolt installation hole 633 to achieve a fixed connection among the connector assembly 90, the socket 631 and the housing assembly 21. A connection structure is simple and reliable, which simplifies an assembly process.

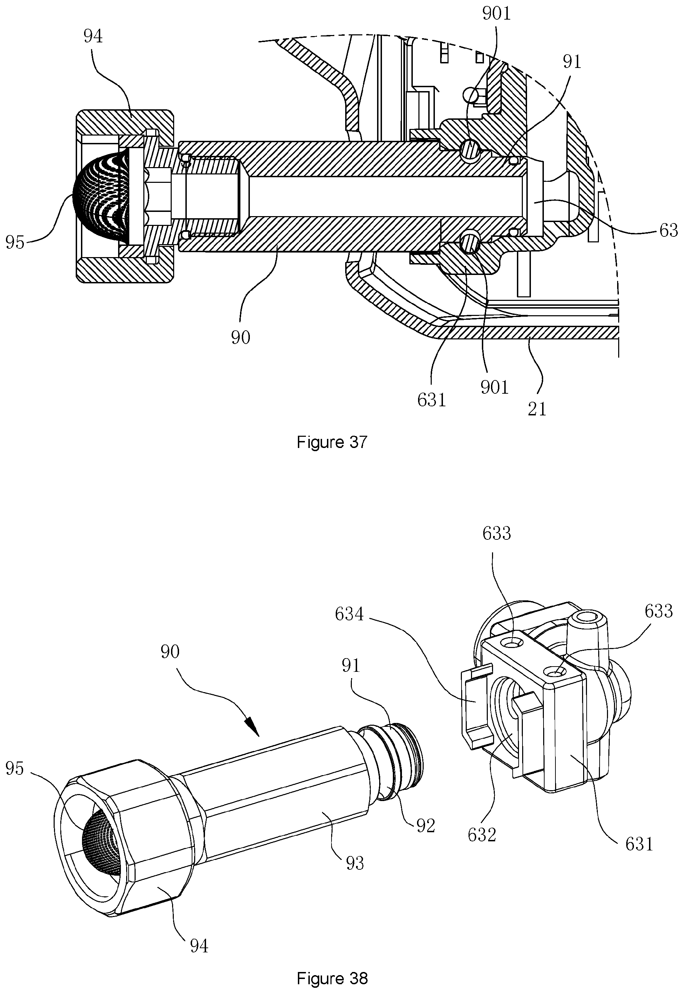

Please refer to FIG. 38. The connector assembly 90 is required not to rotate when in use. In a further embodiment of the disclosure, a limiting mechanism is arranged between the connector assembly 90 and the main liquid inlet 63, and the limiting mechanism is configured to be capable of preventing the connector assembly 90 from rotating relative to the main liquid inlet 63. In an embodiment of the disclosure, the limiting mechanism includes a non-circular outer wall 93 arranged on the connector assembly 90, and a non-circular limiting groove 634 arranged on an outer side of the main liquid inlet 63 and matching a shape of a non-circular outer wall 93. In a specific embodiment, an inherent hexagonal outer wall of the connector assembly 90 may be used as the limiting mechanism. Accordingly, a hexagonal limiting groove matched with the hexagonal outer wall may be arranged on the socket 631. It should be noted that the hexagonal limiting groove does not have to be a complete closed hexagon. It may be only a part of the hexagon, as long as it can prevent the connector assembly 90 from rotating when matched with the outer wall of the connector assembly 90. In some other embodiments, the non-circular outer wall 93 may be other shapes such as square, oval, etc. Accordingly, a contour of the non-circular limiting groove 634 also needs to be properly adjusted to adapt to the non-circular outer wall 93.

Please refer to FIG. 38. In a further embodiment, in order to facilitate a connection of the connector assembly 90 with the external water supply pipeline, a nut 94 is arranged at one end of the connector assembly 90 away from the main liquid inlet 63, and the nut 94 is rotatably connected with the connector assembly 90. A sealing gasket ring is arranged at one end of the connector assembly 90 away from the main liquid inlet 63. At least one end of the connector assembly 90 is provided with a filter cover 95 to filter impurities in water.

### Embodiment 2

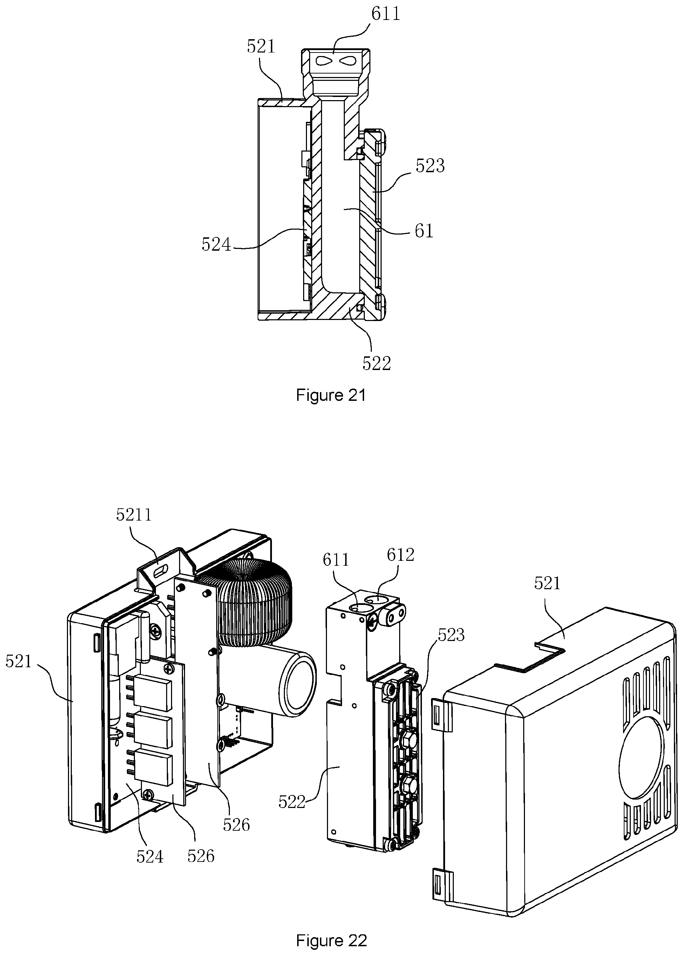

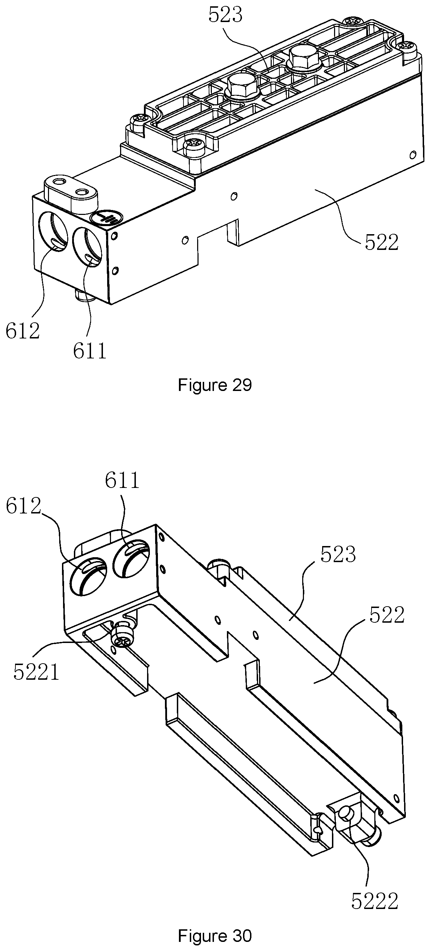

**An** AC scheme is shown in FIG. 22 through FIG. 31. It should be noted that a motor cooling structure in this embodiment is basically the same as that in Embodiment 1, so it will not be described in detail. A cooling structure of the controller 52 in this embodiment is described in detail below.

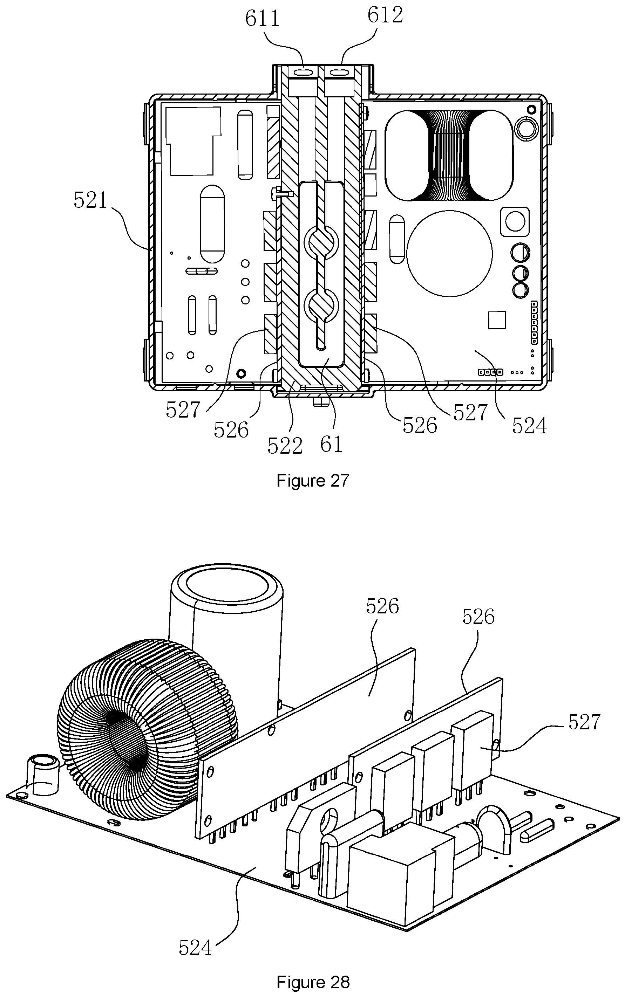

Please refer to FIG. 28. Most of the electronic components in an AC controller are installed on the circuit board 524 through inserting pins. There is a large gap between the electronic components themselves and the circuit board 524, so heat cannot be dissipated through the circuit board 524. For this reason, this embodiment arranges the heat dissipation base in the housing 521 of the controller 52 so that the heating elements in the controller 52 can directly exchange heat with the heat dissipation base. Specifically, please refer to FIG. 22 through FIG. 31. The heat dissipation base is arranged in an area close to the circuit board 524, and heating elements 527 on the circuit board 524 are distributed on two sides of the heat dissipation base and are arranged close to the heat dissipation base. When the heat dissipation base is made of metal material, in order to prevent the heat dissipation base from affecting an electrical performance of the heating element 527, a thermal conductive insulating plate 526 may be arranged between the heat dissipation base and the heating element. In a specific embodiment, the thermal conductive insulating plate may be an aluminum plate with an insulating coating, or a plate made of other thermally conductive insulating materials.

Please refer to FIG. 22 through FIG. 24 and FIG. 30. In this embodiment, in order to facilitate maintenance of the heat dissipation base and the circuit board 524, the heat dissipation base is detachably connected with the controller 52. A first connecting hole 5221 and a second connecting hole 5222 are arranged on the heat dissipation base. Axis directions of the first connecting hole 5221 and the second connecting hole 5222 are perpendicular to each other. The first connecting hole 5221 and the second connecting hole 5222 are connected with each other by screws respectively.

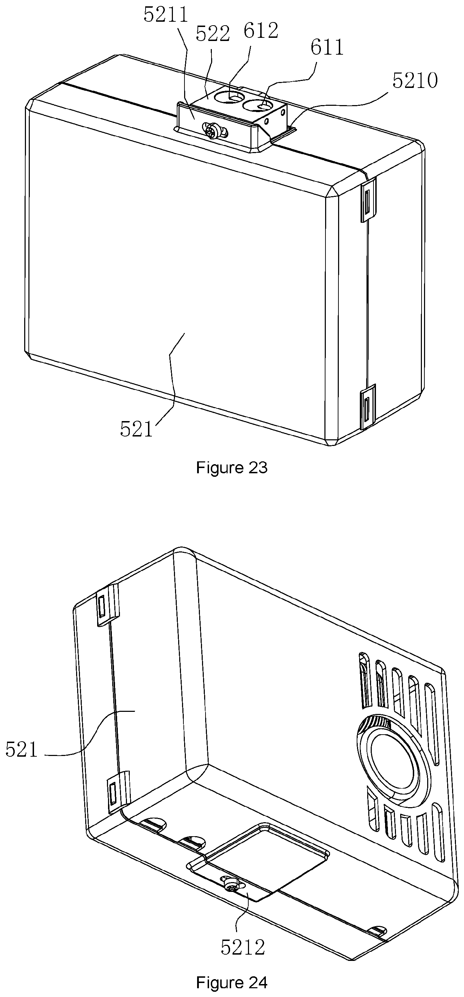

Please refer to FIG. 23. An opening 5210 for the heat dissipation base to pass through is arranged on one of the side walls of the housing 521, and the opening 5210 is configured to allow the heat dissipation base to be inserted into the housing 521 along a direction parallel to the circuit board to facilitate a removal and installation of the heat dissipation base. One end of the heat dissipation base protrudes to an outer side of the opening 5210, and the first liquid inlet 611 and the first liquid outlet 612 are located on an end surface of the heat dissipation base that protrudes to the outside of the opening 5210 to facilitate a connection of water inlet pipeline and water outlet pipeline.

Please refer to FIG. 23 and FIG. 24. Further, in order to facilitate a fixing of the heat dissipation base, at least one edge of the opening 5210 is provided with a protruding lug 5211 protruding toward the outer side of the housing, and the protruding lug 5211 is provided with a first connecting part for connecting the heat dissipation base. A side wall of the housing 521 opposite to the opening 5210 is provided with a positioning groove 5212 matched with the end surface of the heat dissipation base, and the positioning groove 5212 is provided with a second connecting part for connecting the heat dissipation base. In a specific embodiment, the first connecting part and the second connecting part may be, for example, waist-shaped holes. The heat dissipation base is provided with a first connecting hole 5221 and a second connecting hole 5222, axis directions of the first connecting hole 5221 and the second connecting hole 5222 are perpendicular to each other, and the first connecting hole 5221 and the second connecting hole 5222 are respectively connected with the first connecting part and the second connecting part by screws.

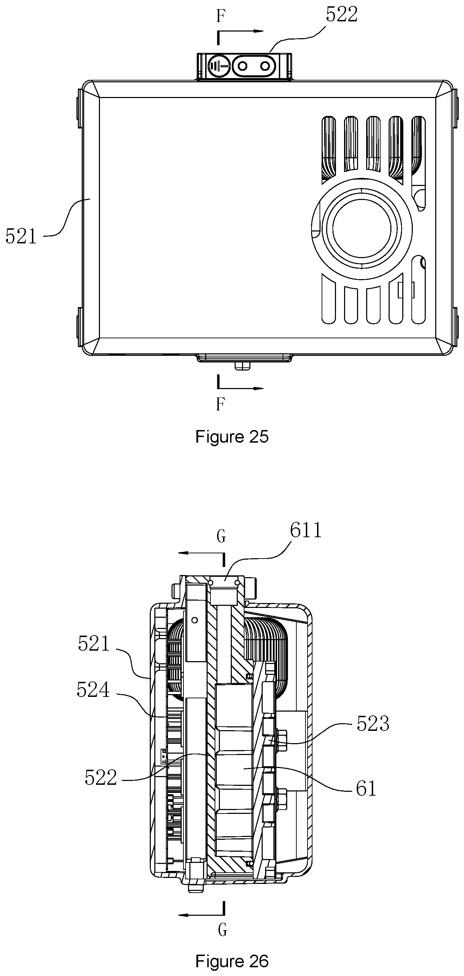

Further, please refer to FIG. 26. In order to ensure a firmness and sealing of the electronic components in the controller 52, the heating element is installed on a first side of the circuit board 524, and structural adhesive is filled between a second side of the circuit board 524 and an inner wall of the housing 521. The second side is a side facing away from the first side.

Please refer to FIG. 22. In order to facilitate a maintenance and repair of components on the circuit board, the housing 521 includes a first half housing and a second half housing detachably connected with each other, the circuit board 524 is installed on the first half housing, and the first side of the circuit board 524 is arranged toward the second half housing.

It should be understood that a connection method between the heat dissipation base and the housing 521 is not unique, and any assembly method that can achieve a detachable connection between the heat dissipation base and the housing 521 should be applicable to the disclosure.

In summary, the disclosure has technical effects as follows.

**The** machine assembly of the disclosure is capable of performing efficient cleaning work under a high power, high water pressure and high flow in various conditions, and may achieve a cleaning ability of a general gasoline washing machine. A working pressure of the machine assembly is generally greater than 13 MPa, and its flow rate is greater than 480 L/H. It is a first high-water-pressure, high-flow DC washing machine on a market, is a DC electric washing machine that may basically replace gasoline washing machines, and may meet user's needs for higher cleaning ability in conditions without AC power supply.

**The** disclosure integrates the housing assembly, the motor pump assembly, the battery pack assembly and a driving assembly into a whole which is designed as a machine assembly that may be independently moved and installed. It is not only compact in structure, beautiful in appearance and small in size, but also may be installed on different application platforms at any time to meet various needs according to different usage conditions, thereby expanding a scope of use.

**The** disclosure adopts a battery pack assembly including multiple battery packs as a DC power source, so that power may be supplied to the outside in a parallel combination or a series-parallel combination. When the battery pack is exhausted, a fully charged battery pack may be quickly replaced, thereby solving a problem of power endurance when the user is using the device.

**The** disclosure adds the mode switch on the upper housing, thereby increasing a battery life of the washing machine, providing multiple working modes of short-term high-power and high-efficiency operation, and providing more choices for users.

**The** disclosure dissipates heat from the controller through water cooling and dissipates heat from the motor through water cooling and oil cooling at the same time, thereby improving the heat dissipation efficiency of the motor and the controller, enabling the motor to maintain high-power operation for a long time and adapting to current usage requirements.

In this disclosure, the working fluid delivered by the pump head is used as the coolant for the motor and the controller. Under a negative pressure of the pump head, the working fluid first flows through coolant flow passages of the controller and the motor, taking away the heat in the controller and the motor, and then is delivered to the washing assembly through the pump head, thereby achieving the flow of the coolant without adding additional driving elements.

**The** controller of the disclosure is softly connected with the motor, which may prevent the vibration of the motor from being transmitted to the controller, thereby increasing the duration life of the controller and reducing a failure rate.

**The** heat dissipation base of the disclosure is detachably connected with the controller, which facilitates the maintenance of the heat dissipation base and the circuit board.

**The** disclosure connects the connector assembly with the main liquid inlet and the housing assembly at the same time, thereby ensuring an installation strength of the connector assembly while simplifying an equipment structure and improving assembly efficiency.

**The** above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

In the description herein, numerous specific details are provided, such as examples of components and/or methods, to provide a thorough understanding of embodiments of the disclosure. However, one skilled in the art will recognize that the embodiments of the disclosure may be practiced without one or more of the specific details, or with other devices, systems, assemblies, methods, parts, materials, features, and so forth. In other conditions, well-known structures, materials, or operations are not specifically shown or described in detail to avoid obscuring aspects of the embodiments of the disclosure.

## Claims

1. A power assembly, comprising:
a motor;
a controller, the controller electrically connected with the motor; and
a first cooling unit, the first cooling unit comprising a first coolant flow passage and a second coolant flow passage, wherein the first coolant flow passage is configured to be capable of exchanging heat with a heating element of the controller, and the second coolant flow passage is configured to be capable of exchanging heat with an outer housing of the motor;
wherein, the first coolant flow passage and the second coolant flow passage are connected in series or in parallel with each other, the first cooling unit is provided with a main liquid inlet and a main liquid outlet, and the first cooling unit is configured such that coolant is capable of passing through the first coolant flow passage and the second coolant flow passage in a process of flowing from the main liquid inlet to the main liquid outlet.

2. The power assembly according to claim 1, wherein, the controller comprises a heat dissipation base made of thermal conductive material, the first coolant flow passage is arranged in the heat dissipation base, and two ends of the first coolant flow passage are exposed on a surface of the heat dissipation base and respectively comprises a first liquid inlet and a first liquid outlet.

3. The power assembly according to claim 2, wherein, the heat dissipation base comprises a base body with a groove-shaped flow passage, and an end cover detachably covering the groove-shaped flow passage, and the groove-shaped flow passage and the end cover together enclose to define the first coolant flow passage.

4. The power assembly according to claim 2, wherein, the heat dissipation base is detachably connected with the controller.

5. The power assembly according to claim 2, wherein, a thermal conductive insulating plate is arranged between the heat dissipation base and the heating element of the controller.

6. The power assembly according to claim 4, wherein, the controller further comprises a housing and a circuit board, the circuit board is installed in the housing, and the heating element is installed on a first side of the circuit board.

7. The power assembly according to claim 6, wherein, an opening for the heat dissipation base to pass through is arranged on a first side wall of the housing, and the opening is configured to allow the heat dissipation base to be inserted into the housing along a direction parallel to the circuit board.

8. The power assembly according to claim 7, wherein, one end of the heat dissipation base protrudes to an outer side of the opening, and the first liquid inlet and the first liquid outlet are located on an end surface of the heat dissipation base that protrudes to an outside of the opening.

9. The power assembly according to claim 8, wherein, at least one edge of the opening is provided with a protruding lug protruding toward an outer side of the housing, and the protruding lug is provided with a first connecting part to be connected with the heat dissipation base.

10. The power assembly according to claim 7, wherein, a positioning groove matched with an end surface shape of the heat dissipation base is arranged on a second side wall of the housing opposite to the opening, and the positioning groove is provided with a second connecting part to connect the heat dissipation base.

11. The power assembly according to claim 6, wherein, structural adhesive is filled between a second side of the circuit board and an inner wall of the housing.

12. The power assembly according to claim 6, wherein, the housing comprises a first half housing and a second half housing detachably connected with each other, the circuit board is installed on the first half housing, and the first side of the circuit board is arranged toward the second half housing.

13. The power assembly according to claim 2, wherein, the controller further comprises a housing and a circuit board, the circuit board is installed in the housing, and at least a part of the heat dissipation base is an integrated structure with the housing.

14. The power assembly according to claim 1, wherein, the second coolant flow passage is arranged at a rear end of the outer housing of the motor, and the rear end is an end away from an output shaft of the motor.

15. The power assembly according to claim 14, wherein, the second coolant flow passage is configured to be capable of guiding the coolant to be uniformly distributed on an end surface of the outer housing.

16. The power assembly according to claim 15, wherein, two ends of the second coolant flow passage are exposed on a surface of the outer housing and respectively comprises a second liquid inlet and a second liquid outlet.

17. The power assembly according to claim 16, wherein, the second cooling passage comprises a spiral flow passage, a radial flow passage and an axial flow passage, the spiral flow passage is distributed on an end surface of the outer housing, the radial flow passage is staggered with the spiral flow passage in an axial direction of the motor, a first end of the radial flow passage passes through a side wall of the outer housing, a second end of the radial flow passage is arranged close to a center of the end surface of the outer housing, a first end of the axial flow passage is communicated with the second end of the radial flow passage, a second end of the axial flow passage is communicated with an innermost circle of the spiral flow passage, one of the second liquid inlet and the second liquid outlet is communicated with the first end of the radial flow passage, and another of the second liquid inlet and the second liquid outlet is communicated with an outermost circle of the spiral flow passage.

18. The power assembly according to claim 17, wherein, the rear end of the outer housing is provided with a spiral groove and a rear cover detachably covering the spiral groove, and the spiral groove and the rear cover together enclose to define the spiral flow passage.

19. The power assembly according to claim 1, wherein, the first coolant flow passage is flexibly communicated with the second coolant flow passage.

20. The power assembly according to claim 19, wherein, the first coolant flow passage and the second coolant flow passage are communicated with each other through a transfer tube.

21. The power assembly according to claim 20, wherein, the transfer tube is a flexible tube.

22. The power assembly according to claim 20, wherein, two ends of the transfer tube are communicated with the first coolant flow passage and the second coolant flow passage respectively through flexible connectors, the flexible connectors are configured such that when there is a relative displacement between the motor and the controller, the flexible connectors are capable of maintaining a sealed state between the transfer tube and the first coolant flow passage and maintaining a sealed state between the transfer tube and the second coolant flow passage.

23. The power assembly according to claim 22, wherein, the flexible connectors comprise a first plug-in part and a second plug-in part arranged parallel to each other at two ends of the transfer tube, the first plug-in part is rotatably connected with one end of the first coolant flow passage, and the second plug-in part is rotatably connected with one end of the second coolant flow passage.

24. The power assembly according to claim 1, further comprising a second cooling unit, wherein, the second cooling unit comprises a cavity arranged inside the outer housing, and the cavity is filled with insulating coolant.

25. The power assembly according to claim 24, wherein, the insulating coolant is insulating oil.

26. The power assembly according to claim 24, wherein, a volume of the insulating coolant is greater than or equal to 95% of a volume of the cavity.

27. The power assembly according to claim 24, wherein, the cavity is distributed at least at two ends of a rotor and two ends of a stator of the motor.

28. The power assembly according to claim 24, wherein, the outer housing is provided with a wiring terminal passing through inner and outer sides of the outer housing, the wiring terminal is insulated from and sealed with the outer housing, and an inner end of the wiring terminal is electrically connected with a winding in the motor through a conductor.

29. The power assembly according to claim 1, further comprising a housing assembly, wherein, the motor and the controller are accommodated in the housing assembly, the main liquid inlet is provided with a connector assembly, a first end of the connector assembly is communicated with the main liquid inlet, a second end of the connector assembly protrudes to an outer side of the housing assembly, and the connector assembly is detachably connected with the housing assembly and the main liquid inlet at the same time.

30. The power assembly according to claim 29, wherein, one of the main liquid outlet and the connector assembly is provided with a plug, another of the main liquid outlet and the connector assembly is provided with a socket, the plug is plugged into and coupled with an inserting hole arranged on the socket, and a sealing ring is arranged between the plug and the inserting hole.

31. The power assembly according to claim 30, wherein, a limiting groove is arranged on an outer wall of the plug, the socket is provided with a bolt installation hole arranged perpendicular to or at an angle to an axis direction of the inserting hole, a partial area of the bolt installation hole penetrates the inserting hole, a bolt is arranged in the bolt installation hole, the bolt installation hole is flush with the limiting groove on the plug inserted into the inserting hole, and a partial area of the bolt is accommodated in the limiting groove to prevent the plug from being separated from the inserting hole along an axial direction of the plug.

32. The power assembly according to claim 31, wherein, the housing assembly is provided with a fixing part, and the fixing part is provided with a bolt hole for the bolt to pass through.

33. The power assembly according to claim 29, wherein, a limiting mechanism is arranged between the connector assembly and the main liquid inlet, and the limiting mechanism is configured to be capable of preventing the connector assembly from rotating relative to the main liquid inlet.

34. The power assembly according to claim 33, wherein, the limiting mechanism comprises a non-circular outer wall arranged on the connector assembly, and a non-circular limiting groove arranged on an outer side of the main liquid inlet and matching a shape of the non-circular outer wall.

35. The power assembly according to claim 29, wherein, a nut is arranged at one end of the connector assembly away from the main liquid inlet, and the nut is rotatably connected with the connector assembly.

36. The power assembly according to claim 29, wherein, a sealing gasket ring is arranged at one end of the connector assembly away from the main liquid inlet.

37. The power assembly according to claim 29, wherein, at least one end of the connector assembly is provided with a filter cover.

38. A power assembly, comprising:
a motor;
a first cooling unit, the first cooling unit comprising a second coolant flow passage, and the second coolant flow passage is configured to be capable of exchanging heat with an outer housing of the motor;
a second cooling unit, the second cooling unit comprising a cavity arranged inside the outer housing, and the cavity filled with insulating coolant.

39. The power assembly according to claim 38, wherein, the second coolant flow passage is arranged at a rear end of the outer housing of the motor, and the rear end is an end away from an output shaft of the motor.

40. The power assembly according to claim 39, wherein, the second coolant flow passage is configured to be capable of guiding coolant to be uniformly distributed on an end surface of the outer housing.

41. The power assembly according to claim 40, wherein, two ends of the second coolant flow passage are exposed on a surface of the outer housing and respectively comprises a second liquid inlet and a second liquid outlet.

42. The power assembly according to claim 41, wherein, the second cooling passage comprises a spiral flow passage, a radial flow passage and an axial flow passage, the spiral flow passage is distributed on an end surface of the outer housing, the radial flow passage is staggered with the spiral flow passage in an axial direction of the motor, a first end of the radial flow passage passes through a side wall of the outer housing, a second end of the radial flow passage is arranged close to a center of the end surface of the outer housing, a first end of the axial flow passage is communicated with the second end of the radial flow passage, a second end of the axial flow passage is communicated with an innermost circle of the spiral flow passage, one of the second liquid inlet and the second liquid outlet is communicated with the first end of the radial flow passage, and another of the second liquid inlet and the second liquid outlet is communicated with an outermost circle of the spiral flow passage.

43. The power assembly according to claim 38, wherein, the insulating coolant is insulating oil.

44. The power assembly according to claim 38, wherein, a volume of the insulating coolant is greater than or equal to 95% of a volume of the cavity.

45. A motor pump assembly, comprising:
a motor;
a pump head, the pump head installed at a power output end of the motor;
a controller, the controller electrically connected with the motor; and
a first cooling unit, the first cooling unit comprising a first coolant flow passage and a second coolant flow passage, wherein the first coolant flow passage is configured to be capable of exchanging heat with a heating element of the controller, and the second coolant flow passage is configured to be capable of exchanging heat with an outer housing of the motor;
wherein, the first coolant flow passage and the second coolant flow passage are connected in series or in parallel with each other, the first cooling unit is provided with a main liquid inlet and a main liquid outlet, and the first cooling unit is configured such that coolant is capable of passing through the first coolant flow passage and the second coolant flow passage in a process of flowing from the main liquid inlet to the main liquid outlet; and
wherein the main liquid outlet is communicated with a liquid inlet of the pump head.

46. The motor pump assembly according to claim 45, further comprising a second cooling unit, wherein, the second cooling unit comprises a cavity arranged inside the outer housing of the motor, and the cavity is filled with insulating coolant.

47. A garden tool, comprising:
a housing assembly, the housing assembly comprising a battery pack cavity and a cover covering a top of the battery pack cavity;
a battery pack assembly, the battery pack assembly accommodated in the battery pack cavity; and
a power assembly, the power assembly electrically connected with the battery pack assembly, wherein
the power assembly comprises:
a motor;
a controller, the controller electrically connected with the motor; and
a first cooling unit, the first cooling unit comprising a first coolant flow passage and a second coolant flow passage, wherein the first coolant flow passage is configured to be capable of exchanging heat with a heating element of the controller, and the second coolant flow passage is configured to be capable of exchanging heat with an outer housing of the motor;
wherein, the first coolant flow passage and the second coolant flow passage are connected in series or in parallel with each other, the first cooling unit is provided with a main liquid inlet and a main liquid outlet, and the first cooling unit is configured such that coolant is capable of passing through the first coolant flow passage and the second coolant flow passage in a process of flowing from the main liquid inlet to the main liquid outlet.

48. The cleaning tool according to claim 47, further comprising a second cooling unit, wherein, the second cooling unit comprises a cavity arranged inside the outer housing of the motor, and the cavity is filled with insulating coolant.

49. The cleaning tool according to claim 47, wherein, a power-off switch is arranged in the housing assembly, the power-off switch is electrically connected with the controller, a linkage mechanism is arranged between the power-off switch and the cover, and the linkage mechanism is configured to be capable of enabling the power-off switch to be turned on when the cover is in a closed state, and to be capable of enabling the power-off switch to be turned off when the cover is in an open state.
